(19) Europäisches Patentamt
European Patent Office
Office européen des brevets

(11) **EP 1 584 692 B1**

(12) **EUROPEAN PATENT SPECIFICATION**

(45) Date of publication and mention of the grant of the patent:
**10.10.2007 Bulletin 2007/41**

(51) Int Cl.:
***C12Q 1/68*** *(2006.01)*    ***B01L 3/00*** *(2006.01)*

(21) Application number: **05252232.3**

(22) Date of filing: **08.04.2005**

(54) **Method of nucleic acid analysis, nucleic acid analysis device and disk for nucleic acid analysis**

Verfahren zur Nukleinsäure Analyse, Vorrichtung zur Nukleinsäure Analyse und Platte für eine Nukleinsäure Analyse

Procédé d'analyse d'acide nucléique, appareil d'analyse d'acide nucléique et disque pour l'analyse d'acide nucléique

(84) Designated Contracting States:
**AT BE BG CH CY CZ DE DK EE ES FI FR GB GR HU IE IS IT LI LT LU MC NL PL PT RO SE SI SK TR**

(30) Priority: **09.04.2004 JP 2004116173**

(43) Date of publication of application:
**12.10.2005 Bulletin 2005/41**

(73) Proprietor: **TAIYO YUDEN CO., LTD.**
**Tokyo 110-0005 (JP)**

(72) Inventors:
• **Hagiwara, Naoto**
**Tokyo 110-0005 (JP)**
• **Ishiguro, Takashi**
**Tokyo 110-0005 (JP)**

(74) Representative: **Jackson, Richard Eric et al**
**Carpmaels & Ransford**
**43 Bloomsbury Square**
**London WC1A 2RA (GB)**

(56) References cited:
• **KOPP ET AL: "chemical amplification: continuous flow PCR on a chip" SCIENCE, AMERICAN ASSOCIATION FOR THE ADVANCEMENT OF SCIENCE,, US, vol. 280, 15 May 1998 (1998-05-15), pages 1046-1048, XP002107956 ISSN: 0036-8075**
• **LIU J ET AL: "A NANOLITER ROTARY DEVICE FOR POLYMERASE CHAIN REACTION" ELECTROPHORESIS, WEINHEIM, DE, vol. 23, 2002, pages 1531-1536, XP002332356 ISSN: 0173-0835**
• **SCHNEEGASS I ET AL: "MINIATURIZED FLOW-THROUGH PCR WITH DIFFERENT TEMPLATE TYPES IN A SILICON CHIP THERMOCYCLER" LAB ON A CHIP, ROYAL SOCIETY OF CHEMISTRY, CAMBRIDGE, GB, vol. 1, no. 1, September 2001 (2001-09), pages 42-49, XP009030439 ISSN: 1473-0197**
• **ZOVAL J V ET AL: "Centrifuge-based fluidic platforms" PROCEEDINGS OF THE IEEE IEEE USA, vol. 92, no. 1, January 2004 (2004-01), pages 140-153, XP002341782 ISSN: 0018-9219**

SEQUENCE LISTING

    <110> TAIYO YUDEN CO., LTD.

    <120> METHOD OF NUCLEIC ACID ANALYSIS, NUCLEIC ACID ANALYSIS DEVICE AND DISK FOR NUCLEIC ANALYSIS

    <130> P040355EP

    <150> JP116173/2004
    <151> 2004-04-09

    <160> 2

    <170> SeqWin99, version 1.02

    <210> 1
    <211> 24
    <212> DNA
    <213> Artificial Sequence

    <220>
    <223> plasmid pUC

<220>
<221> misc feature
<222> (1)...(24)
<223> PCR Primer

<400> 1
cgccagggtt ttcccagtca cgac        24

<210> 2
<211> 24
<212> DNA
<213> Artificial Sequence

<220>
<223> plasmid pUC

<220>
<221> misc feature
<222> (1) ... (24)
<223> PCR Primer

<400> 2
cagtgggagg tccttgaagg caat        24

**Description**

BACKGROUND OF THE INVENTION

1. Field of the Invention

The present invention relates to a method of nucleic acid analysis comprising flowing a sample containing nucleic acids to a channel of which the temperature changes in the repetitive pattern, and optically detecting concentration of the nucleic acid amplified by PCR in the sample and the like, a nucleic acid analysis device and a disk for nucleic acid analysis.

2. Description of the Related Art

[Patent Document 1] JP-T-2000-512138
[Patent Document 2] JP-T-2000-509608
[Patent Document 3] JP-T-2000-511435
[Patent Document 4] JP-A-6-30776
[Patent Document 5] JP-T-2003-149253
[Patent Document 6] JP-T-2002-503331

Polymerase chain reactive (PCR) method is a method of amplifying selectively specific DNA present in trace amount in a sample, and DNA amplified thereby can be analyzed and utilized as a chemically single substance. Technologies of analyzing and/or utilizing thus-isolated DNA are applied to general industries as well as scientific researches and the medical field.

Real-time PCR method, which is known as a PCR-applied analysis method, is a method of amplifying selectively DNA which is intended to be quantified by PCR, and based on the obtained amplification curve, measuring the initial amount of DNA indirectly contained in the sample. This method is also used as a method of measuring the amount of RNA in a sample by involving reactive by reverse transcriptase which synthesizes quantitatively complementary DNA from RNA having a specific array.

A real-time PCR method is widely used as a measurement method having reproductibility and improved quantitability, and a simple DNA or RNA quantifying method which requires no complicated manipulations. It is applied not only in a field of measurement methods for nucleic acid concentration, but also a method of efficiently detecting and/or identifying gene polymorphism which is known as Single Nucleotide Polymorphism (SNP) on a human genome, and confers inter-individual differences to genetic strains associated with diseases.

Relatively slow reactive, which is not limited to PCR, can be traced for the reactive progress process with the lapse of time by an elementary method. Specifically, it includes a method of tracing the reactive progress process of the reactive by sampling a portion from the reactor during the reactive, and analyzing the sampled sample in detail, or, a method of tracing the reactive progress process of the reactive by pouring the same reactive solution into two or more reactor, and terminating the reactive of each of the reactor for the two or more reactor, respectively under the same reactive condition at the prescribed times to obtain time-series samples of the same reactive, and analyzing each of the time-series samples. However, for the former method, sampling is needed, and for the latter method, analysis in the same container is not possible, and for both methods, all of the reactive processes from the initial to the end cannot be made as a closed system. Also, the sampled, measured sample becomes useless without contributing to the following reactive.

To obtain DNA amplification curve which is needed for quantification in a real-time PCR method, the reactive progress process should be traced with the lapse of time which leads to obtaining information for DNA amount in the reactive sample solution. In this case, to improve quantitability, stability of reaction system, simplicity of the measurement device and the like, it is preferable to preserve the same identity or quality of reaction system in all of the reactive process, and also, it is preferable that the amount of the required reactive sample solution is small.

Therefore, it is desired that all of the reactive processes from the initial to the end are made as a closed system, not by the above-mentioned elementary methods. For this matter, for example, Patent Documents 1 and 2 disclose a device for carrying out quick control of a PCR sample with monitoring the reactive progress, as a system and a method for monitoring DNA amplification with fluorescence.

In addition, according to the principle of the PCR method, one process of PCR full reactions can be explained with three steps in division, specifically, a dissociation process of the intended template DNA into single stranded DNAs, a double strand-formation process between the single stranded DNA and an oligonucleotide (primer DNA) having ability to form a double strand with the specific array selected on the template DNA, and further a DNA elongation reaction which would be an initiation point of the end of the primer DNA which has formed a double strand. The sequential reactions of such three steps are composed of exposing the reactive sample solution, respectively to the optimal temperature of the reactive process, and its thermal cycle can be defined as a PCR thermal cycle. By repeating a PCR thermal cycle, replicative synthesis of DNA proceeds, to amplify exponentially intended DNA. Herein, to increase correlation of the amplification tendency of the PCR product with the initial amount of DNA contained in the sample, it is preferable to conduct measurement after reaching the reactive plateau every PCR thermal cycle.

For such matters, for example, Patent Document 3 in addition to Patent Documents 1 and 2 discloses a device which can subject biological samples to rapid thermal cycling with using the air as a heat conduction medium.

On the other hand, Patent Document 4 discloses flow system PCR technique and device.

In a conventional PCR technique, reactive sample solution is fixed in one reactor and exposed to PCR thermal cycle with the lapse of time. On the contrary, in flow system PCR technique, the reactive sample solution moves along the channel in the capillary. On the other hand, the capillary is placed to contact physically with a heat conduction action body of repeated different temperatures along the channel. Specifically, by bringing the capillary into physical contact with a heat conduction action body of repeated different temperatures along the channel, the reactive sample solution, which moves spatially in the capillary with limited flow rate, is given thermal cycle needed for PCR according to the elapsed time for movement.

As described above, since the technique of giving PCR thermal cycle to a reactive sample solution in flow system PCR is different from the conventional things, if by applying the device of the conventional PCR to construct basic structure of the device, it is not possible. Therefore, it is expected to provide flow system PCR device which can be used industrially at low cost, and has high reliability.

To make compact structure of a reactive measurement device having a capillary as a reactive tube as in the above-mentioned flow system PCR, the reactive tube is preferably fixed to any substrate. In addition, it is desired that the reaction system in such capillary is constituted together with a detection mechanism which enables direct observation of the change of the amount of the materials contained in the reactive sample solution by an optical detection device.

As such structure, Patent Document 5 discloses a structure for measuring sequentially with one detection system by rotating the disk, two or more channels which are radially formed on a disk-shape substrate from the center of the disk.

Further, Patent Document 6 discloses a device and method for using centripetal acceleration to propel liquid transportation in ultra-micro liquid element engineering system which is provided with information science equipped in the device.

As explained above, in the conventional PCR method, the reactive sample solution is fixed in one reactor, and exposed with the lapse of time to repeated PCR thermal cycle. In this case, in the reactive process proceeding sequentially with the lapse of time, it is not possible to obtain the information observed in the initial step of the reactive by observing the same reaction system which has reached later steps of the reactive. Herein, in the conventional real-time PCR method, a method is taken in which information for DNA amount in the reactive sample solution in the course of the reactive, is measured by a detection system which functions synchronizedly with the progress of its reaction system.

Usually, for such detection system, fluorescent dye of which the fluorescence intensity increases by binding to a double strand DNA, is mixed in advance in the reactive sample solution, and used during the progress of PCR as a detection reagent showing direct or rapid response, and reversely, it is difficult to use the detection reagent showing indirect or slow response.

In addition, in the PCR method, DNA is replicated per PCR thermal cycle as explained above, but to carry out measurement substantially reflecting its amplification efficiency, it is important to detect a double strand DNA-fluorescent dye complex which is dynamically formed with a PCR thermal cycle in a suitable timing. The suitable timing is considered to be varied depending on PCR setting conditions such as a sample, a template DNA amount, a primer, thermal cycle and the like, and in addition, different every PCR thermal cycle. However, with the conventional PCRs, which is a reaction system proceeding sequentially with the lapse of time as described above, is not possible to use the obtained information by feedback to the reaction system or the detection system. In addition, it is not possible to measure any different properties after the progress of the reaction.

The method and device for real-time PCR disclosed in Patent Document 1, Patent Document 2 and Patent Document 3, use the conventional PCR method, and are not technologies to solve the above-mentioned problems.

On the contrary, in flow system PCR technique, as explained above, the reactive sample solution moves in the channel spatially, and is given PCR thermal cycle according to the elapsed time for movement. In this case, the reactive sample solution located in each different distance from the initial point to the last point of the channel, becomes a reactive sample solution of each different reactive step from the initial to the last of PCR full reactive processes corresponding to its distance. Therefore, with observing normally moving PCR reactive sample solution at two or more places, it is possible to observe PCR reactive progress which proceeds in the channel at one time.

With continuous flow system real-time PCR PCR in which real-time PCR is incorporated into the flow system PCR technique having such characteristics, it is not necessary to measure information for DNA amount in the reactive sample solution during the progress of the reaction by a detection system which functions synchronizedly with the progress of its reaction system, which can solve the above-explained disadvantages.

In addition, any functions of the reaction system, the detection system and the control system connecting them are incompatible in the reaction when used as a measurement device, the manipulations cannot help but being stopped, and also, when the thermal cycle proceeds with the incompatibility occurring in detection system having inconvenience, the reactive information meanwhile get lost already and cannot be recovered. In addition, since detection system generally varies in time, output and sensitivity, output and sensitivity change remarkably at the time of starting the device, but it cannot be said that there is no change of output and sensitivity even after stabilization of the device, and drift phenomenon of output and sensitivity often occurs.

According to continuous flow system real-time PCR PCR method, measurement to be compared can be carried out simultaneously and continuously, loss of measurement time due to troubles of the device system as mentioned above, can be avoided.

Though the advantage is great when the principle of such flow system PCR method is applied to real-time PCR, technologies therefore have been scarcely reported. Especially, technologies have been desired to measure information effectively for DNA amount in the reactive sample solution which moves through channel, at precise locations of two or more places of the channel, but the conventional technology for this has not been enough.

Patent Document 4 describes that progress of the reaction in the capillary can be detected by ultraviolet irradiation and the like, but has no clear description about which place of the capillary is measured, and whether one part or two or more parts are measured and the like, and has no disclosure what of the reactive is measured and how it is resolved. In addition, Patent Document 5 describes a method of detecting two or more channels by one detection system, but has no disclosure about a technology of measuring the same channel at two or more places. In addition, it could not be structure for adaptation to a flow system PCR method.

In addition, in a device for flow system reaction, a solution sending system is not dispensable for causing normal flow of a reactive sample solution, but it is advantageous not to use a device such as a solution sending pump and the like for a compact measurement device.

Patent Document 6 discloses a technology for ultra-micro liquid element engineering system in which a capillary is placed on a rotating disk substrate and centripetal acceleration is used to propel liquid transportation. However, the centripetal acceleration is used mainly to propel liquid transportation to the reactive concave, but a technology which uses centripetal acceleration for causing normal flow of a reactive sample solution has not been disclosed. In addition, a method of carrying out an optical measurement along the channel of the flow system reaction has not been described either, and a structure for adaptation to flow system PCR using centripetal acceleration has not been disclosed. In addition, the heat source is placed on the substrate.

SUMMARY OF THE INVENTION

This invention provides a method of nucleic acid analysis, comprising:

Providing a channel having a repetitive pattern of temperature differences for progress of temperature dependent reaction of nucleic acids;
routing a sample containing nucleic acids through the channel having the repetitive pattern of temperature differences to perform the temperature dependent reaction of nucleic acids; and
performing optical detection at two or more detection points on the channel while the sample flows in the channel.

Also provided is a nucleic acid analysis device, comprising a channel flowing a sample containing nucleic acids, a temperature control means controlling the temperature of the passing area so that the temperature of the sample containing nucleic acids changes in the repetitive pattern when the sample containing nucleic acids flows the channel, and a photodetection means for optically detecting the sample containing nucleic acids flowing on the channel, wherein detection is carried out by the photodetection means at two or more places of the channel.

Also provided is a disk for nucleic acid analysis driven by rotation, which has an information recording area for carrying out reading or writing of information, and a sample analysis area in which a channel flowing a sample containing nucleic acids is formed, wherein the direction of reading or writing of information for the information recording area, and the photodetection direction for the analysis area are opposite to each other with the disk interposed therebetween.

BRIEF DESCRIPTION OF THE DRAWINGS

Fig. 1 is an explanation chart showing an example of the channel in the method of nucleic acid analysis of the present invention;
Fig. 2 is an explanation chart showing an example of the sample detection place in the method of nucleic acid analysis of the invention;

Fig. 3 is an explanation chart showing the outline composition in one embodiment of the nucleic acid analysis device of the invention;

Fig. 4 is a plan chart showing one embodiment of the nucleic acid analysis disk of the invention;

Fig. 5 is an enlarged explanation chart of the channel in the same disk for nucleic acid analysis;

Fig. 6 is an imitative chart showing sectional structure of the same disk for nucleic acid analysis;

Fig. 7 is an explanation chart showing an example of the photodetection means used in the nucleic acid analysis device of the invention;

Fig. 8 is an explanation chart (a) showing an example of the channel detection means used in the nucleic acid analysis device of the invention and a frontal view (b) of the photodetection element 97;

Fig. 9 is a sectional imitative chart showing another example of the disk for nucleic acid analysis of the invention;

Fig. 10 is a sectional imitative chart showing further another example of the disk for nucleic acid analysis of the invention;

Fig. 11 is a sectional imitative chart showing further another example of the disk for nucleic acid analysis of the invention;

Fig. 12 is an explanation chart showing further another example of the disk for nucleic acid analysis of the invention according to the manufacturing process;

Fig. 13 is an explanation chart showing further another example of the disk for nucleic acid analysis of the invention according to the manufacturing process;

Fig. 14 is an explanation chart showing further another example of the disk for nucleic acid analysis of the invention according to the manufacturing process;

Fig. 15 is an explanation chart showing another example in which pre-pit information is installed in the disk for nucleic acid analysis of the invention;

Fig. 16 is an explanation chart showing another example in which servo signal is installed in the disk for nucleic acid analysis of the invention; and

Fig. 17 is a chart showing results of amplifying the specific sequence of the plasmid DNA by continuous flow system real-time PCR PCR and measuring the fluorescence intensity in Examples of the invention.

## DESCRIPTION OF THE PREFERRED EMBODIMENTS

With the sample containing nucleic acids in the invention, general reagents for nucleic acid analysis may be mixed. Therefore, for the above-mentioned nucleic acid analysis by PCR, the conventionally used PCR reagents may be contained, specifically, template DNA for amplification purpose, thermal resistance DNA polymerase which is an enzyme synthesizing complementary DNA to a template of which optimal temperature is high, two kinds of primer DNAs having double strand-forming ability to each of the specific arrays of two places selected on the above-mentioned template DNA, and nucleotide which is a substrate for DNA polymerase, are mixed in a solution.

In addition, when real-time PCR is carried out by the method of nucleic acid analysis in the invention, it is possible to further contain as the sample containing nucleic acids, a dye (fluorescent dye) which increases fluorescence intensity by binding to double strand DNA, a nucleic acid probe which is located in the vicinity of the dye-quencher is designed to cause dissociation of the dye-quencher by DNA elongation reaction, and a nucleic acid probe which is designed to cause fluorescent resonance energy movement phenomenon between dyes by hybridization to the area in the vicinity of two kinds of nucleic acid probes to which a donor dye and an acceptor dye are added, respectively. The fluorescent dye and the nucleic acid probe which are mixed with the sample containing nucleic acids, are not especially limited, and can be selected depending on the use. For example, the fluorescent dye can be exemplified preferably by SYBR Green I (Molecular Probes). In addition, the above-mentioned nucleic acid probe can be exemplified preferably by TaqMan probe (Roche) having any sequence, Hybridization Probes (Roche) and the like. The origin and the base sequence of the template DNA which is the object for quantification by the method of nucleic acid analysiss in the invention is not especially limited, and may be ones collected from blood, urine, saliva, semen, milk and the like of human, and also, may be ones derived from other organisms than human.

The thermal resistance DNA polymerase which is mixed with the sample containing nucleic acids in the invention is not especially limited, and various thermal resistances DNA polymerase can be used depending on the use. For example, when the amplified DNA has base less than 3k, TaKaRa Taq (TaKaRa), Gene Taq (NIPPONGENE) and the like are preferred as standard pol I type Taq DNA polymerase. In addition, for carrying out precise PCR, there can be exemplified preferably $\alpha$ type DNA polymerase KOD plus, Pfu DNA polymerase, Pfu Turbo DNA polymerase (TOYOBO), PLATINUM Pfx DNA polymerase (Invitrogen), Pyrobest DNA polymerase (TaKaRa), ProofStart DNA polymerase (Qiagen), Pwo DNA polymerase (Roche), Advantage HF2 (Clontech) and the like. Furthermore, when long DNA of more than 20k bases is amplified, a product can be used which enables amplification of long DNAs by using Taq DNA polymerase and a thermal resistance DNA polymerase having 3'→5' exonuclease activity together, or optimizing a buffer for GC-rich sequence amplification. The product can be exemplified preferably by KOD Dash, EXL DNA polymerase (TOYOBO), Expand 20kb PCR System (Roche), PLATINUM Taq DNA polymerase High Fidelity, Elongase Enzyme Mix, ThermalAce DNA polymerase (Invitrogen), Advantage Genomic and -GC Genomic (Clontech), TaKaRa LA Taq with GC buffer (TaKaRa) and the like.

As a DNA photodetection method, the following methods can be adopted.

Example 1: A method using a dye of which fluorescence increases by binding to double strand

As a PCR reagent, for example, a PCR kit of Roche Diagnostics company (trademark "LC DNA Master SYBR Green I kit") may be used. The kit includes a Taq DNA polymerase, a reactive buffer and dNTP, and the detection reagent includes SYBR Green I. The kit is 10-fold concentrated, and for example, when total amount of PCR solution is 20 $\mu$l, 2 $\mu$l may be added. The template DNA may be contained, for example, in 10 to 100 ng when total amount of PCR solution is 20 $\mu$l, and the primer DNA may be adjusted that the final concentration is 0.1 to 1 $\mu$M. In addition, primer DNA may be designed that the amplification area in the template DNA by PCR is between 50 to 1000 bases. Further, MgCl2 concentration is adjusted to 1 to 5 mM with MgCl2 stock accompanied by the kit, and finally, total amount of the solution may be adjusted with pure water.

The reactive solution adjusted as described above is sent with solution sending means to the channel. The channel and the temperature setting are preferably in the form shown in the document by Kopp, et al. (Science 280, 1046-1048(1998)). The best flow velocity of the solution is varied depending on the inner diameter of the channel and the like, but it is preferable to pass one thermal cycle taking 10 seconds to 1 minute.

The preset temperature of the above-mentioned high temperature area is varied depending on length and sequence of the template DNA, but generally for the template DNA of hundreds of bases, it may be heated to 90 to 99°C, preferably 92 to 97°C. On the other hand, the preset temperature of one low temperature area B1 in the above-mentioned two low temperature areas, is varied depending on dissociation temperature with a primer DNA, and for a primer DNA of 15 to 30 bases, it is 55 to 70°C. In addition, the preset temperature of another low temperature area B2 is preferably set to 70°C to 75°C which is the optimal temperature of the polymerase. In the invention, the above-mentioned high temperature area is preferably formed by installing heating means in the outside of the channel as to heat the reaction solution moving in the channel to more than the dissociation temperature of the above-mentioned DNA, and the above-mentioned low temperature areas B1 and B2 are formed by installing temperature control means in the outside of the channel as to control the reaction solution moving in the channel to less than the dissociation temperature of the above-mentioned DNA. The time of passing each preset temperature area is such that the ratio of high temperature area: low temperature area is preferably 1:2 to 1:3, and further the ratio of B1:B2, which are two temperature-adjusted area s B1 and B2 in the low temperature area, is preferably 1:2 to 1:3.

After conducting PCR under the above-mentioned conditions, detection can be carried out by fluorescence measurement. The excitation wavelength is preferably a wavelength for which SYBR Green I has absorption, LED (470 nm) may be used or may be taken out with prism and the like from source of white light, and the detection wavelength is preferably 510 to 550 nm. As the source of light, not only LED, but also bluish purple LD (405 nm), red LD (635 nm) and the like may be used by selecting the fluorescent dye.

PCR reaction history on the channel can be measured by irradiating excitation light on the measurement points of the channel with rotating the substrate by the above-mentioned substrate rotation mechanism, and detecting radiated fluorescence by detection means. The measurement point on the channel may be any point if it is the low temperature area in one cycle. However, measurement is preferably carried out after incubating the reactive solution at least for the same time for which the reactive solution passes one cycle of the high temperature area and the low temperature area after completing the full cycles and stopping the solution sending.

Example 2: TaqMan method

PCR kit (trademark "Taq Man Universal PCR Master Mix Hybridization Probes Kit"; manufactured by Roche Diagnostics company) is used as the reagent, Taq Man Probe is used as the detection reagent, and adjustment of the reagents can be carried out according to the protocol accompanied by the kit. The reaction conditions are the same as in Example 1. The detection can be carried out by measuring fluorescence, specifically with the same technique as in Example 1. In addition, in the present Example, it is possible to proceed with and detect two or more reactions at the same time with several TaqMan Probes having different sequences and dyes. The dye bound to Taq Man Probes can be selected from known ones, for example, FAM, Cy3, Texas Red and Cy5. The excitation wavelength is 450 to 495, 500 to 550, 565 to 590 and 630 to 650 nm, respectively, and the detection wavelength is 510 to 527, 565 to 590, 606 to 650 and 670 to 750 nm. The excitation light may be LED corresponding to each wavelength or may be taken out with prism and the like from the source of white light. When two or more measurements are carried out with different excitation and detection wavelengths, the above-mentioned detection method by irradiating excitation light on the measurement points on the channel with rotating the substrate by the substrate rotation mechanism, and detecting radiated fluorescence by detection means, can be carried out several times along with differentiating the presets of the detection system.

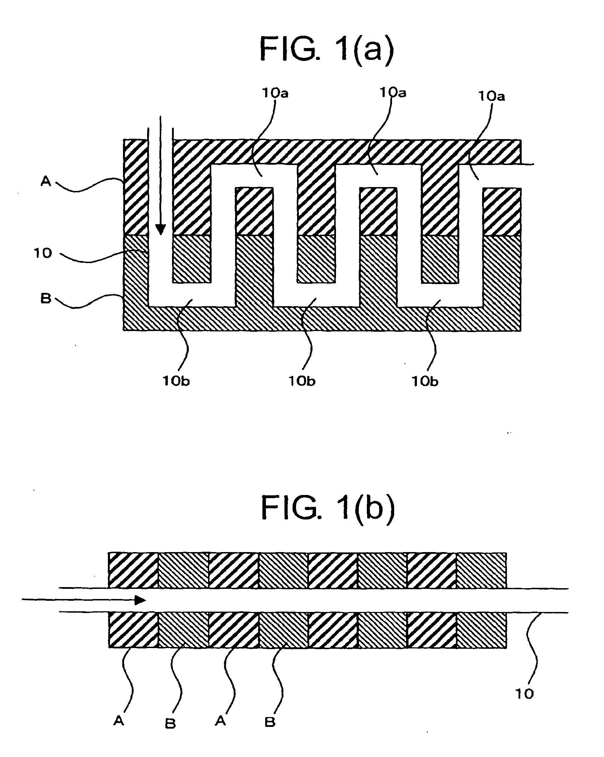

In the method of nucleic acid analysis of the invention, the above-mentioned sample containing nucleic acids is made to flow to the channel which passes through the high temperature area and the low temperature area alternatively and repeatedly. As such channel, for example, the one shown in Fig. 1A can be adopted in which the channel 10 which turns in zigzag configuration, the high temperature area A which is installed along the row of one turning part 10a of the channel 10, and the low temperature area B which is installed along the row of the other turning part 10b of the channel 10. However, as shown in Fig. 1B, it is also possible to form the high temperature area A and the low temperature area B alternatively on the channel 10 which is linearly elongated.

In this case, it is preferable that the high temperature area A of the channel is set to 90 to 99°C. The low temperature area B is preferably set to 50 to 80°C, and further preferably set to two temperatures of 55 to 60°C and 65°C to 75°C.

The channel may be further divided to three or four or more temperature regions.

Furthermore, the channel may be given thermal cycle by passing areas in which temperature increases or decreases with time.

By the fact that the above-mentioned sample containing nucleic acids passes through the above-mentioned channel, in the high temperature area, dissociation of double strand DNA occurs, and in the low temperature area, binding of single stranded template DNA and primer, and elongation reaction by DNA polymerase from 3' terminal of the primer of the template DNA-primer complex occurs.

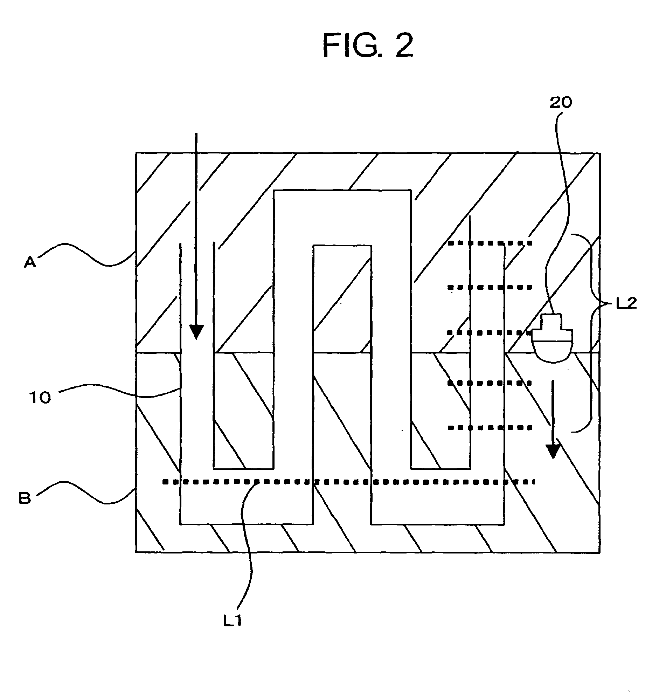

In addition, the reactive progress process of the above-mentioned sample containing nucleic acids in the channel can be detected sequentially by detection by the photodetection means 20 along the above-mentioned two or more places of the channel, for example, Line L1 passing the low temperature area B of each cycle in Fig. 2.

In addition, two or more places may be also detected with prescribed interval by the photodetection means 20 along Line L2 moving from the high temperature area A to the low temperature area B, or from the low temperature area B to the high temperature area A of the channel in Fig. 2. In this case, the state of DNA dissociation can be detected together with the above-mentioned sample containing nucleic acids in the channel being in high temperature, and temperature profile of DNA amplified by PCR can be investigated.

The optical detection system is preferably detection by optical system such as a general absorption meter and a fluorometer and further, detection by laser picking up can be exemplified. The source of light of the optical system can be exemplified by a xenon lamp or a halogen lamp and a semiconductor laser. In addition, the photo detector of the optical system can be exemplified by a photomultiplier or a CCD, a photodiode and the like. The spectrum means is constituted with a prism or a filter, a grating, a slit, a beam splitter, lens, a mirror and the like. Absorbance measurement may be conducted by passing the light through measurement points or reflecting the light to them. Fluorescence detection may be conducted by placing a photo detector at any efficient place. Turbidity measurement is basically conducted in the same manner as in the absorbance measurement.

Furthermore, it is preferable that the time for which the sample passes through the high temperature area and the low temperature area of one cycle, is adjusted that the reaction reaches plateau in each cycle. Such adjustment can be carried out by changing the flow rate of the sample and the channel length. In addition, with monitoring the reaction state in each cycle, the flow rate of the above-mentioned sample may be controlled.

To enable measurement of two or more points with the channel passing the below of the optical detection system, there may be a method of moving a capillary and a substrate forming the channel, and a method of moving an optical detection system, or sometimes both of the methods may be used.

The movement mechanism of the channel can be exemplified by very general transportation means using motor and screw or motor and belt. Further preferably, it is possible to measure the two or more points by rotating the channel, and the rotation mechanism can be exemplified by stepping motor, and spindle servo device used in an optical disk drive. When the spindle servo device of the optical disk drive is used, a substrate is needed in which tracking is formed for applying servo. The substrate in which the tracking is formed may be the same as or separate from the substrate in which the channel is formed. The optical detection system is generally hard to move, but when it is very small, it can be moved with a general transportation mechanism, and the small optical detection system can be exemplified preferably by laser picking up of optical disk drive.

The method of nucleic acid analysis of the invention can be utilized to a use such as an environmental inspection, a food inspection, an agricultural inspection, a legal medicine, a personal identity inspection and an animal identity inspection.

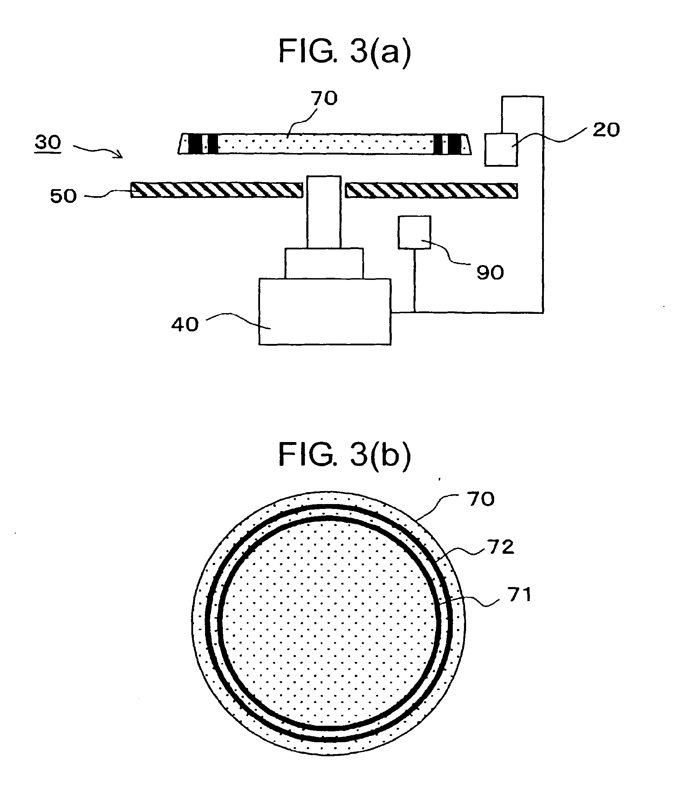

Fig. 3 is an outline composition chart showing one example of an analysis device for carrying out the method of nucleic acid analysis of the invention. As shown in Fig. 3A, the analysis device 30 is constituted by the rotation means 40, the disk 50 rotation-driven by the rotation means 40, the temperature control means 70, which is placed in the upper part of the disk 50, for forming the high temperature area and the low temperature area, the reading or writing means 90 of optical recording media placed near inner circumference in the lower part of the disk 50, and the photodetection means 20 placed near outer circumference in the upper part of the disk 50.

As shown in Fig. 3B, the temperature control means 70 has the high temperature heating part 71 and the lower temperature heating part 72. The high temperature heating part 71 and the lower temperature heating part 72 are concentrically placed so that the high temperature heating part 71 is located in the inner circumference and the lower temperature heating part 72 is located in the outer circumference. As the temperature control means 70, for example, an electrothermal line, a peltier element, a lamp heater and the like are preferably used.

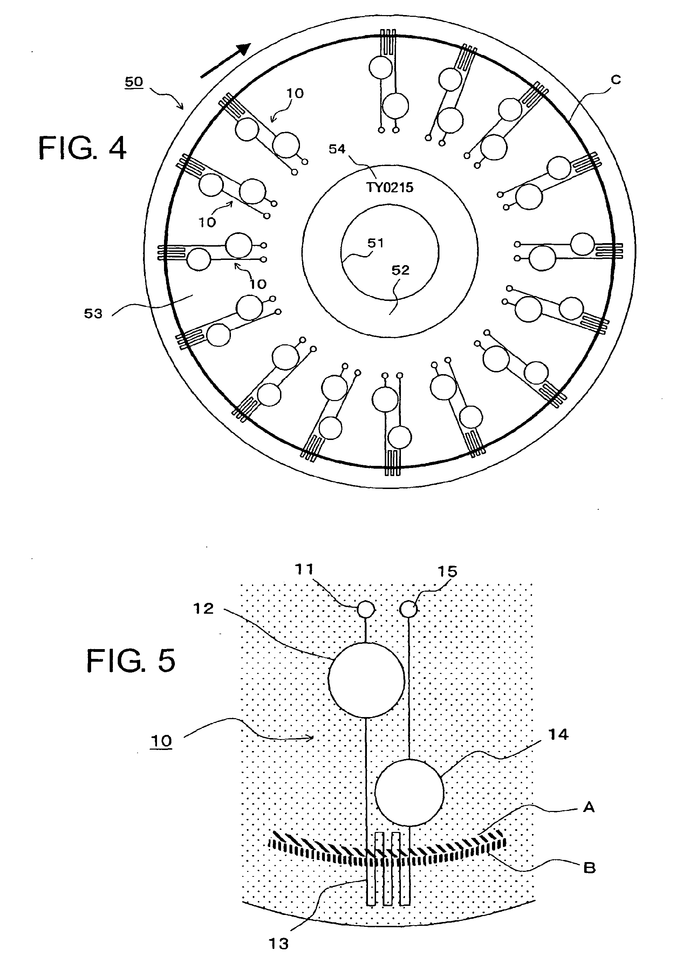

Fig. 4 shows one example of disk 50. The disk 50 has an inserting hole 51 of the rotational axis in the center, the information record area 52 installed in the inner side, and the analysis area 53 installed in the outer side. In the analysis area 53, two or more channels 10 are formed. In this embodiment, total 15 pieces of the channel 10 are radially arrayed and formed, ID numbers of 1 to 15 are assigned to the channel, respectively, and with recognizing the ID numbers of 1 to 15 with eyes, each sample can be injected corresponding to respective channel. Furthermore, for the photodetection means 20 to identify the ID number of the two or more channels, the channel 10 of ID number 15 and the channel 10 of ID number 1 are spaced out more than the interval between other channels. In addition, for the disk 50, disk ID number 54 is assigned.

As shown in Fig. 5, each the channel 10 has the sample inlet 11 installed in one end, the concave for the supply part 12, the zigzag part 13 reciprocating two or more times between the inner side and the outer side along the direction of the radius of the disk 50, the concave for the receipt part 14 and the air outlet 15 installed in the other end. The inlet 11 and the concave for the supply part 12 are located in the inner side than the concave for the receipt part 14. Furthermore, though the air outlet 15 is installed on the same circumference as that of the sample inlet 11 in Fig. 5, it may be in the inner side than the inlet 11.

In addition, if the disk 50 rotates, the sample injected from the inlet 11 to the concave for the supply part 12, flows on the zigzag part 13 of the channel 10 with the action of the centrifugal force, and flows into the concave for the receipt part 14. The flow rate can be adjusted by controlling the rotation speed of the disk 50, or changing the configuration of the channel 10. For example, with setting the sectional area of the turning part of the zigzag part 13 of the channel 10 broader than that of the other parts, smooth flow is realized, or threshold for the beginning of flow can be installed by narrowing some part than other parts. And, the high temperature area A and the low temperature area B cross the channel of the zigzag part 13, and are formed concentrically to the rotation center of the substrate.

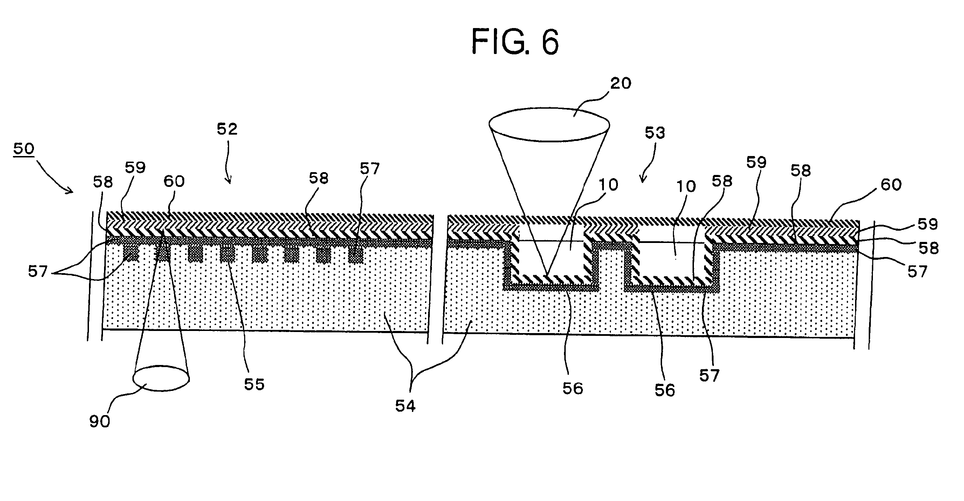

As shown in Fig. 6, the disk 50 has the transparent substrate 54 such as polycarbonate and the like. In the information record area 52 on the substrate 54, the pre-groove 55 is formed, and in the analysis area 53, the concave part 56 of the channel 10 is formed. And, on the surface of the substrate 54 forming the pre-groove 55 and the concave part 56, the light absorption layer 57 made from an exposure dye film comprising an organic dye is formed. Furthermore, on the light absorption layer 57, the reflective layer 58 made from a metallic film such as Au and the like is formed. And, on the whole surfaces of the information record area 52 and other parts than the concave part 56 of the analysis area 53, the topcoat layer 59 made from a ultraviolet curing resin and the like is formed. Finally, the sealing member 60 made from a polyethylene film and the like is coated to seal the concave part 56, to form the channel 10.

In the above-mentioned disk 50, the information record area 52 has record structure of optical recording media, and by the reading or writing means 90 placed in the lower part of the disk 50, the reading and writing of information is carried out. In addition, the sample made to flow on the channel 10 of analysis area 53 is detected by the photodetection means 20. As described above, the direction of the reading or writing of information for the information record area 52, and the direction of photodetection for the analysis area 53 are in the opposite side with posing the reflective layer 58 therebetween, whereby the placement of the reading or writing means 90 and the photodetection means 20 is simple. Since drive structure of known optical recording media can be used as the reading or writing means 90, manufacturing cost can be reduced.

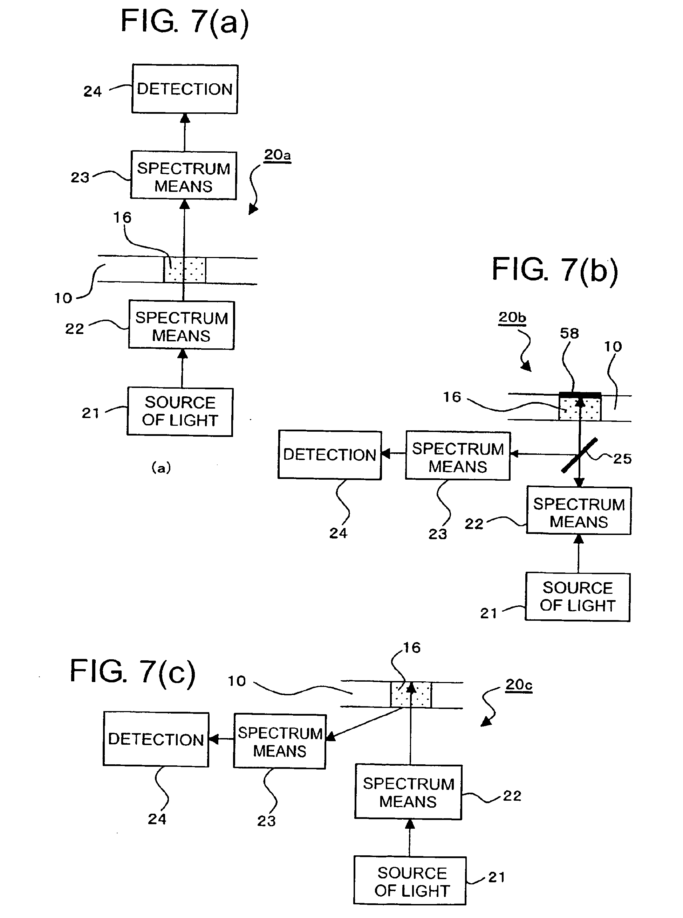

Fig. 7 shows various examples of the photodetection means 20. The photodetection means 20a of Fig. 7A has such structure that the light of the source of light 21 from one surface of the disk 50 is irradiated to the measurement point 16 of the channel 10 through the spectrum means 22, and the light transmitting to the opposite surface of the disk 50 is received with the detector 24 through the spectrum means 23.

The photodetection means 20b of Fig. 7B has such structure that the light is irradiated from the source of light 21 placed on one surface of the disk 50 through the spectrum means 22 and the beam splitter 25, to the measurement point 16 of the channel 10, the light reflected by the reflective layer 58 formed in the back side of the channel 10, is taken out in the direction of right angle by the beam splitter 25, and received with the detector 24 through the spectrum means 23.

The photodetection means 20c of Fig. 7C has such structure that the light is irradiated from the source of light 21 placed on one surface of the disk 50 through the spectrum means 22 to the measurement point 16 of the channel 10, specific component in the sample is luminescent by receiving the light, and the luminescent light is received with the detector 24 through the spectrum means 23.

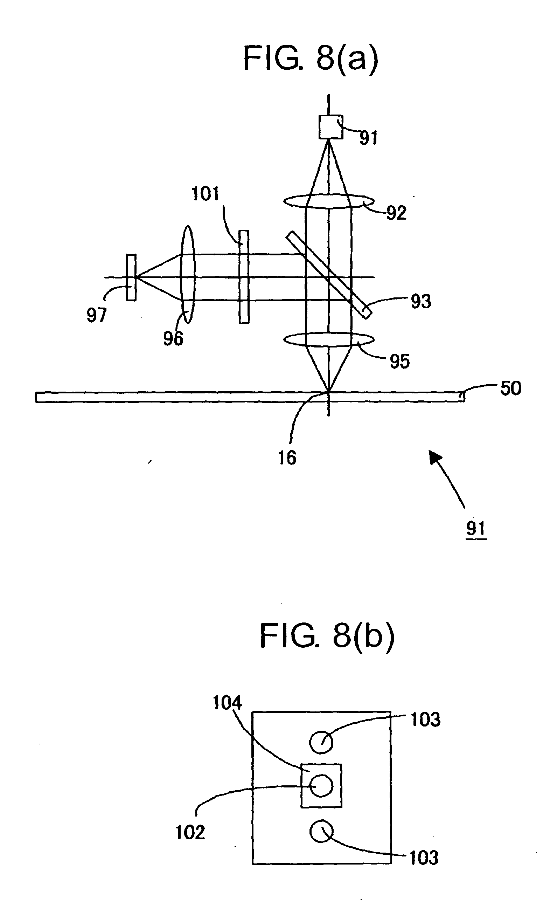

Fig. 8A shows one example of the detection means 90 of the channel. In this detection means 90 of the channel, laser light is emitted from the source of laser light 91 of 635 nm wavelength by laser drive circuit (not shown), this laser light is irradiated through the multi-lens 92, the half mirror 93 and collimator (not shown), and further the object lens 95, to the measurement point 16 of the channel (not shown). In the channel, for adding TaqMan probe in which the sample solution is modified with fluorescent dye Cy5, 670 to 750 nm of fluorescence is generated by 635 nm of laser light if a template DNA exists. And, 635 nm of original laser light reflected by the reflective layer (not shown) which is installed in the back side of the channel, and 670 to 750 nm of fluorescence generated in the channel are guided to the half mirror 93 through the object lens 95 and the collimator (not shown), and reflected by 90 degrees with the half mirror 93, and the 635 nm original laser beam of which the phase is matched with the diffraction grating 101, is diverged to two or more, and this is condensed to the photodetection element 97 by the condenser 96.

Fig. 8B shows the image of the diffraction beam 103 made by diffraction with the main beam 102 and the diffraction grating 101 which is image-formed on the photodetection element 97. In the image of the main beam, mixed light of the original 635 nm laser light and 670 to 750 nm fluorescence are image-formed. In one diffraction beam, only the original 635 nm laser light is image-formed. Since the cutoff filter 104 to which less than 650 nm does not transmit is installed in front of the photodetection element at the location where the main beam forms an image, it is possible to detect light quantity of only fluorescence at the point where the main beam forms an image.

In addition, light quantity of main beam and/or diffraction beam which is obtained with the photodetection element 97 is exchanged with electric signal, and amplified with an amplification circuit (not shown). Fluorescence amount is measured with the signal from the main beam, and using the signal from the diffraction beam, servo such as focus tracking and the like is carried out. According to the nucleic acid analysis device 30 as described above, a sample containing nucleic acids is injected to the inlet 11 of each channel 10 of the disk 50, reserved in the concave for the supply part 12, and the disk 50 is rotated by the rotation means 40, and the sample is made to flow to the channel 10 from the concave for the supply part 12, and the sample flows through the zigzag part 13. At this time, the sample passes alternatively through the high temperature area A and the low temperature area B formed by the temperature control means 70, whereby DNA amplification by PCR is achieved.

In addition, after the sample having flown firstly into the channel 10 arrives at the concave for the receipt part 14, DNA detection is carried out along Line C (See Fig. 4) of the circumference of the disk 50 by the photodetection means 20. The photodetection means 20 conducts DNA detection in the prescribed place of the low temperature area B for every cycle passing through the high temperature area A and the low temperature area B, and based on the value, a computer not shown finds DNA concentration at each measurement point.

As results, a DNA amplification curve is found when repeating cycle pass through the high temperature area A and the low temperature area B. In the amplification curve, the curve rises rapidly as the initial concentration of the detection subject DNA in the sample become higher, thereby the initial concentration of the subject DNA in the sample can be obtained by analyzing the above-mentioned amplification curve, and quantification of the subject DNA is possible.

Furthermore, the reading or writing means 90 calculates exactly the location of the sample inlet 11 by reading information described in the information record area 52, or connects the detection value by the photodetection means 20 with the corresponding ID number of the channel 10, or monitors the measurement values in each measurement point of the channel 10 to calculate optimal rotation number of the disk 50, which helps to send control signal to the rotation means 40 and the like. In addition, after completing DNA quantification for every sample of each channel 10, the results can be written in the information record area 52.

In addition, according to this nucleic acid analysis device, by carrying out detection at the time point when the sample flows on the channel 10 and flows into the concave for the receipt part 14, DNA concentration of every cycle can be measured at one time, whereby measurement work can be carried out effectively.

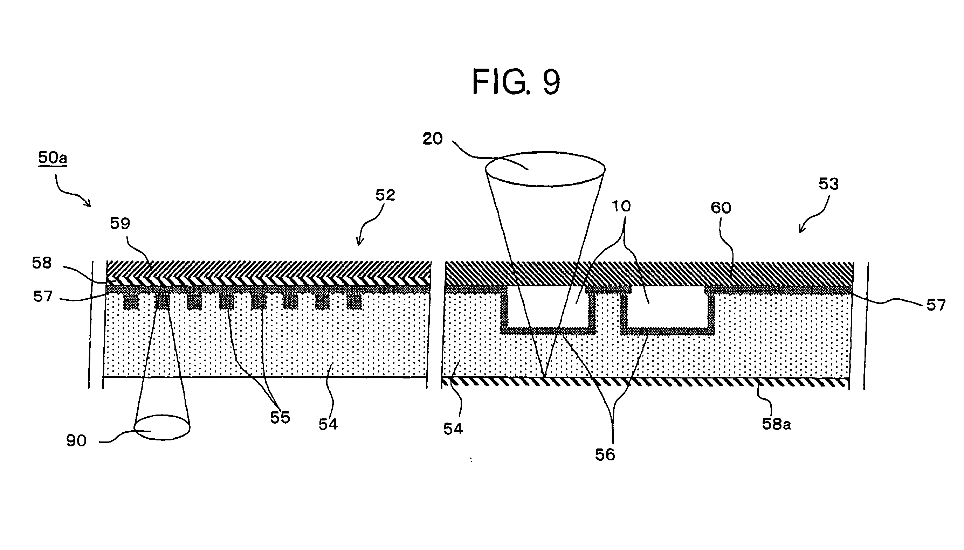

Fig. 9 shows another example of the disk for nucleic acid analysis used in the invention.

This disk 50a has the transparent substrate 54 such as polycarbonate and the like. In the information record area 52 on the substrate 54, the pre-groove 55 is formed, and in the analysis area 53, the concave part 56 of the channel 10 is formed. And, on the surface of the substrate 54 forming the pre-groove 55 and the concave part 56, the light absorption layer 57 made from an exposure dye film comprising an organic dye is formed. Furthermore, in the information record area 52, the reflective layer 58 made from a metallic film such as Au and the like is formed on the light absorption layer 57, and the topcoat layer 59 is formed on the reflective layer 58. On the other hand, in the analysis area 53, the sealing member 60 made from a polyethylene film and the like is coated to seal the concave part 56, to form the channel 10. Furthermore, on the opposite surface side of the substrate 54 of the analysis area 53, the reflective layer 58a is formed.

In the above-mentioned disk 50a, the information record area 52 has record structure of optical recording media, and by the reading or writing means 90 placed in the lower part of the disk 50a, the reading and writing of information is carried out. In addition, the sample flowing to the channel 10 of the analysis area 53 is detected by the photodetection means 20. As described above, the direction of reading or writing for the information record area 52, and the photodetection direction for the analysis area 53 are in the opposite side with posing the reflective layer 58 therebetween, whereby the placement of the reading or writing means 90 and the photodetection means 20 is simple.

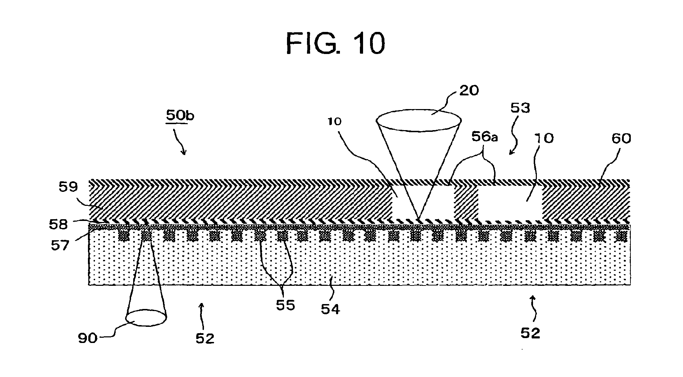

Fig. 10 further shows another example of a disk for nucleic acid analysis used in the invention.

In this disk 50b, the pre-groove 55 is formed on the almost whole surfaces of the transparent substrate 54, the light absorption layer 57 made from an exposure dye film comprising an organic dye is formed on the surface on which the pre-groove 55 is formed. Then, the reflective layer 58 is formed on the light absorption layer 57, and the topcoat layer 59 is formed on the reflective layer 58. On the other hand, the sealing member 60 is prepared made from a polyethylene film and the like in which the concave part 56 is formed with laminate transcript or embossing finish and the like. This sealing member 60 is heat sealed on the topcoat layer 59, to form the channel 10.

According to this disk 50b, with interposing the reflective layer 58, the lower part composes the information record area 52, and the upper part composes the analysis area 53, whereby the information record area 52 can be broadened. In addition, the channel 10 of the analysis area 53 can change in shape by changing only the concave part 56 formed on the lower surface of the sealing member 60.

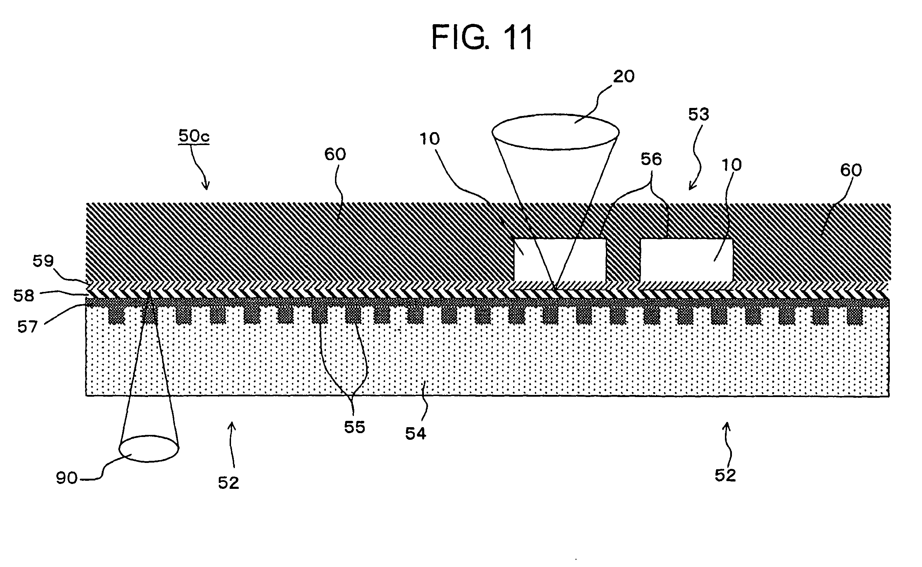

Fig. 11 further shows another example of the disk for nucleic acid analysis used in the invention.

In this disk 50c, the pre-groove 55 is formed on the almost whole surfaces of the transparent substrate 54, and the light absorption layer 57 made from an exposure dye film comprising an organic dye is formed on the surface on which the pre-groove 55 is formed. Then, the reflective layer 58 is formed on the light absorption layer 57. On this reflective layer 58, the topcoat layer 59 having the hole part 56a is formed with screen printing. Furthermore, on this, the sealing member 60 made from a polyethylene film and the like is coated to seal the hole part 56a, to form the channel 10. Furthermore, a protecting layer (not shown) protecting the reflective layer 58 may be filmed by a spin coat method between the reflective layer 58 and the topcoat layer 59.

According to this disk 50c, with interposing the reflective layer 58, the lower part composes the information record area 52, and the upper part composes the analysis area 53, whereby the information record area 52 can be broadened. In addition, the channel 10 of the analysis area 53 can change in shape by changing only the channel pattern formed on the screen, whereby the cost can be reduced.

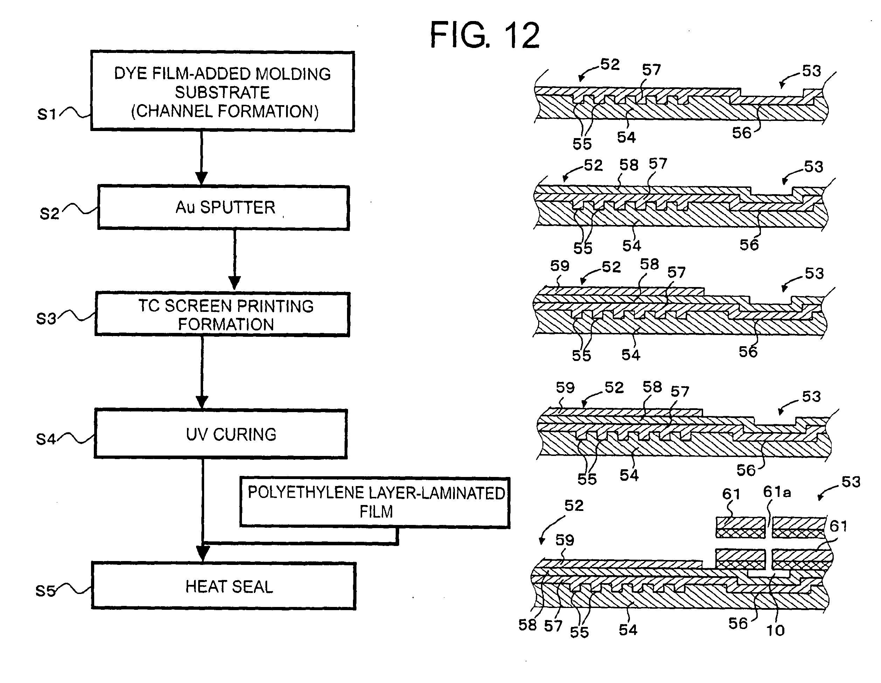

Fig. 12 shows further another example of the disk for nucleic acid analysis used in the invention with a manufacturing process thereof. The left side of the figure is a chart for the manufacturing process, and the right side is a sectional imitative chart of the disk.

First, as in the example shown in the above-described Fig. 6, the pre-groove 55 and the concave part 36 are formed on one surface of the substrate 54, and on this, the light absorption layer 57 is formed (Step S1).

Then, Au is subjected to sputtering, to form the reflective layer 58 (Step S2).

In addition, on the information record area 52, the topcoat layer 59 is subjected to screen printing (Step S3), and cured by irradiating a ultraviolet ray (Step S4).

Next, the polyethylene layer-laminated film 61 in which the polyethylene layer is laminated on the inner surface of PET film, is coated, and heat sealed (Step S5). As results, the opening of the concave part 56 is closed to form the channel 10. Furthermore, on the polyethylene layer-laminated film 61, the hole 61a such as the inlet and the like is formed. Furthermore, polycarbonate film and the like can be also used as the above-mentioned laminate film.

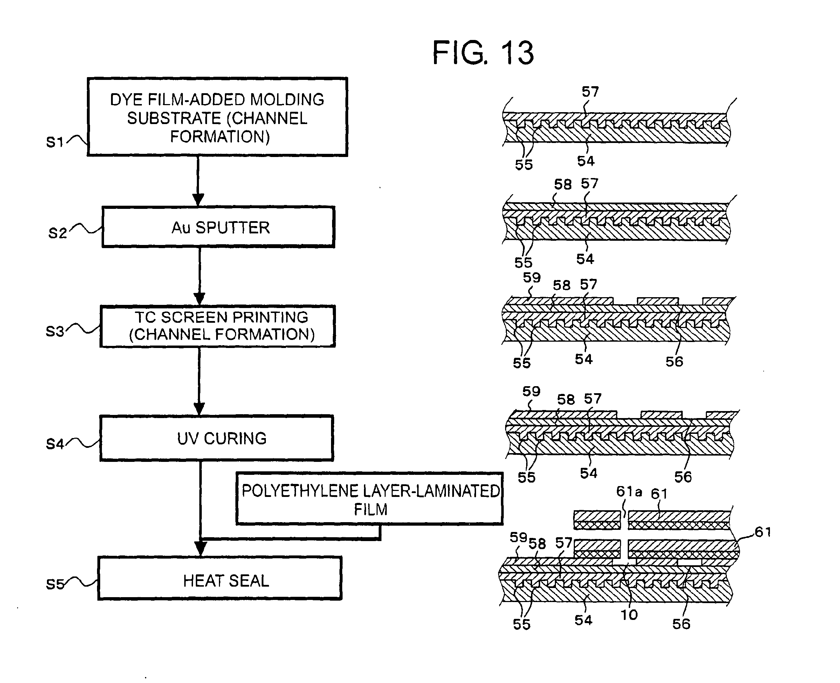

Fig. 13 shows further another example of the disk for nucleic acid analysis used in the invention with a manufacturing process thereof. The left side of the figure is a chart for the manufacturing process, and the right side is a sectional imitative chart of the disk.

First, as in the examples shown in the above-described Fig. 10 and Fig. 11, the pre-groove 55 is formed on the whole surfaces of the substrate 54, and on this, the light absorption layer 57 is formed (Step S1).

Then, Au is subjected to sputtering, to form the reflective layer 58 (Step S2).

In addition, the topcoat layer 59 is subjected to screen printing (Step S3), and cured by irradiating a ultraviolet ray (Step S4). At this time, on the part to which the topcoat layer 59 is not applied, the concave part 56 of the channel 10 is formed.

Next, on the topcoat layer 59, the polyethylene layer-laminated film 61 as mentioned above is coated, and heat sealed (Step S5). As results, the opening of the concave part 56 is closed to form the channel 10. Furthermore, on the polyethylene layer-laminated film 61, the hole 61a such as the inlet and the like is formed.

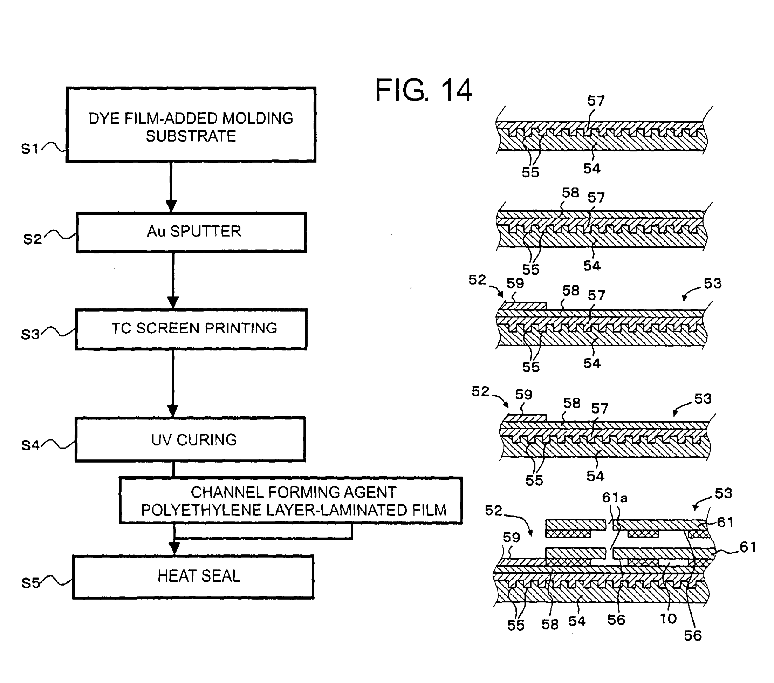

Fig. 14 shows further another example of the disk for nucleic acid analysis used in the invention with a manufacturing process thereof. The left side of the figure is a chart for the manufacturing process, and the right side is a sectional imitative chart of the disk.

First, as in the examples shown in the above-described Fig. 10 and Fig. 11, the pre-groove 55 is formed on the whole surfaces of the substrate 54, and on this, the light absorption layer 57 is formed (Step S1).

Then, Au is subjected to sputtering, to form the reflective layer 58 (Step S2).

In addition, on the information record area 52, the topcoat layer 59 is subjected to screen printing (Step S3), and cured by irradiating a ultraviolet ray (Step S4).

Next, on the analysis area 53, the polyethylene layer-laminated film 61 as mentioned above is coated, and heat sealed (Step S5). At this time, on the inside side of the polyethylene layer-laminated film 61, the concave part 56 is formed, and the polyethylene layer-laminated film 61 is heat sealed, to form the channel 10. Furthermore, on the polyethylene layer-laminated film 61, the hole 61a such as the inlet and the like is formed.

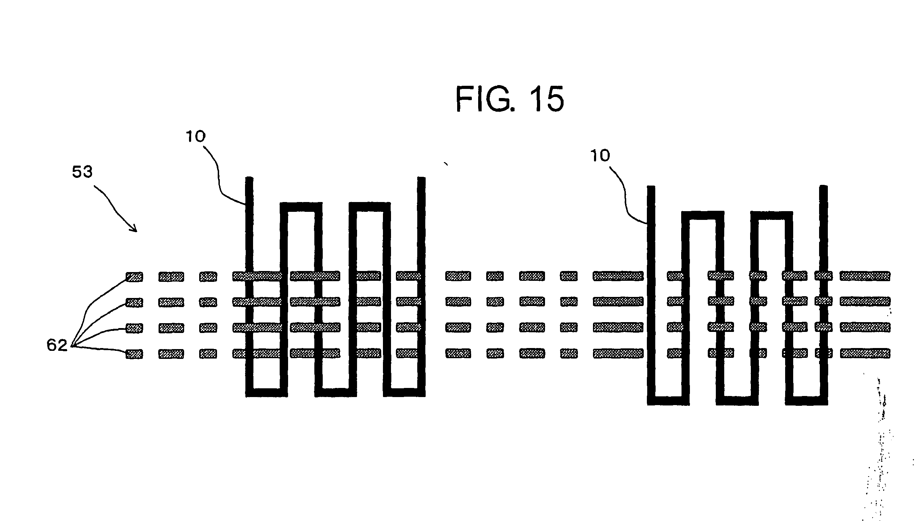

Fig. 15 shows an example in which pre-pit information is given to the analysis area 53 in which the channel 10 is formed, as further another example of the disk for nucleic acid analysis used in the invention. The pre-pit 62 may be overlapped or non-overlapped with the channel 10, the row of the pre-pit 62 is not spiral, and two or more of the same signal tracks which are concentric are installed.

By installation of pre-pit information as described above, it is possible to transmit to the drive, a servo such as tracking focus of picking up by the photodetection means 20 and the like, channel information (information such as the sectional structure, the turning frequency, the volume of the injection and the like of every channel), and the instructions and the like.

In addition, by forming bar code information at the same time in the process in which the channel is formed, and taking coordination with the channel information, double check can be also carried out.

Furthermore, a pre-groove may be installed instead of the pre-pit 62.

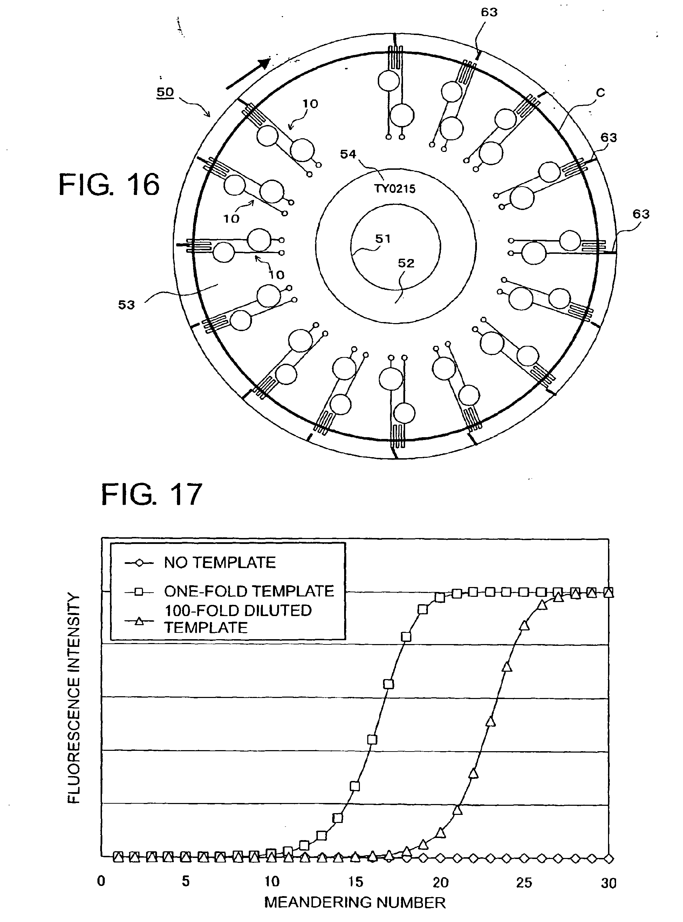

Fig. 16 shows an example in which the servo signal 63 for fitting location is installed in every the channel 10, as further another example of the disk for nucleic acid analysis used in the invention. The servo signal 63 for fitting location can be simultaneously formed in the process of forming the channel 10. The servo signal 63 for fitting location can be read with a photo coupler and the like.

Examples

Hereinafter, the present invention will be explained in detail by Examples, but these Examples do not limit the scope of the invention.

Example 1

The disk shown in the Fig. 4 and Fig. 6 was prepared with the following conditions.

With a disk diameter from 46 mm to 76 mm, the polycarbonate substrate 1 was molded by injection molding method which has 1.2 mm of thickness, 120 mmφ of outer diameter and 15 mmφ of inner diameter, of which on the surface, the pre-groove 55 is formed which is spiral shape for data logging, and has 0.8 μm width, 0.08 μm depth and 1.6 μm pitch, and of which in the outer circumference part, the channel 10 and the information signal printing character 54 shown in Fig. 4 and Fig. 6 are formed. Rockwell hardness ASTM D785 of this polycarbonate substrate 1 was equivalent to M75 pencil hardness HB, and the deflection temperature ASTM D648 was 4.6 kg/cm$^2$, 121°C.

0.65 g of 1,1'-dibutyl-3,3,3',3'-tetramethyl-9,5,4',5'-dibenzoindodi carbocyanine perclorate (manufactured by Japan exposure dye laboratory, Product No. NK3219) as an organic dye for forming the light absorption layer 57, was dissolved in 10 cc of diacetone alcohol as a solvent, which was applied to the surface of the above-mentioned substrate 1 by a spin coat method, to form the light absorption layer 2 made from an exposure dye film of 130 nm film thickness. ρ=nabsdabs/λ of this light absorption layer 2 was 0.45, which was given with nabs which is the real number part of the complex index of refraction, dabs which is its film thickness, and λ which is wavelength of reproduction light, and kabs which is the imaginary number part of the above-mentioned complex index of refraction, was 0.05.

Next, Au film of 80 nm film thickness was filmed on the whole surfaces of the area of diameter 45 to 118 mmφ of this disk by sputtering method, and the reflective layer 58 was formed. On this reflective layer 58, ultraviolet ray curing resin from 40 mm to 80 mm of disk diameter was subjected to screen printing, which was cured by irradiating ultraviolet ray, to form the topcoat layer 59 of 10 μm film thickness. Rockwell hardness ASTM D785 of this topcoat layer 59 after curing was M90, and deflection temperature ASTM D648 was 4.6 kg/cm$^2$, 135°C. Further, on this topcoat layer 59 and the reflective layer 58, the polyethylene layer-laminated film 61 was heat sealed at 140°C which was made from 50 μm transparent PET film to which was added polyethylene layer cut into donut shape and having 30 μm layer thickness, to prepare a hybrid disk which has the information record area (CD-R area) 52 in the inner circumference part by laser, and the analysis area 53 having the channel 10 and the like in the outer circumference part.

Next, the shape of the channel 10 for inspection is shown. The channel for inspection was formed in the outer circumference part of the disk at the time of injection molding of the above-mentioned disk, by a 50 μm-height convex part formed in the mold.

The channel for inspection formed by the convex part has the sample inlet 11, the concave for the supply part 12, the zigzag part 13 (meander style channel for reactive) reciprocating two or more times between the inner side and the outer side along the direction of the radius of the disk 50, the concave for the receipt part 14 and the air outlet 15 installed in the other end. Both of the width and the depth of the channel 10 were 50 μm. The sample inlet 11 and the air outlet 15 were formed on the same circumference at 33 mm radius of the disk, as circular shape of 400 μm diameter. Both of the concave for the supply part 12 and the concave for the receipt part 14 were formed as circular shape of 10 mm diameter. The center of the concave for the supply part 12 was formed at the location of 40 mm radius of the above-mentioned substrate. On the other hand, the center of the concave part for receipt 14 was formed at the location of 53 mm radius of the above-mentioned substrate. In addition, the zigzag part 13 was formed in a range of a rectangle of 10 mm height (radius direction) and 6. 5 mm length (direction of circumference) with the center located at 53 mm radius of the above-mentioned substrate. The channel 10 of the zigzag part 13 was also in the same shape of ditch, and formed as to reciprocate 30. 5 times in vertical direction in a range of the rectangle. The above-mentioned channel 10 was formed in total 15 on the same circumference of the above-mentioned disk of 120 mm diameter at the locations rotated every 22.5°. However, one place of the channel 10 is spaced by 45° from each other, whereby ID of the channel 10 was made to be able to be identified by the photodetection means 20.

Next, temperature distribution in the above-mentioned meander style channel for reaction of the above-mentioned channel for inspection is shown. The area right under the toroidal infrared rays heater which is concentrical with the above-mentioned substrate and has 98 mm inner diameter and 110 mm outer diameter, was heated to 65°C by the toroidal infrared rays heater. Furthermore, the area right under the toroidal infrared rays heater which is concentrical with the above-mentioned substrate and has 110 mm inner diameter and 116 mm outer diameter, was heated to 95°C by the toroidal infrared rays heater. The areas right under the two toroidal infrared ray heaters include the above-mentioned range of the rectangle in which the meander style channel for reactive was formed.

Example 2

Reagent solutions in the present example for carrying out reactive in the above-mentioned channel for inspection are shown.

Reagent :

Polymerase (0.05 unit/$\mu$l Taq DNA polymerase (trademark "ExTaq polymerase", a reactive buffer (trademark "2×ExTaq buffer" (both are made of TAKARA company)), a PCR substrate (a 1 $\mu$M forward primer (manufactured by GENEST company), a 1 $\mu$M reverse primer (manufactured by GENEST company), a 0.4 mM dNTP), a template DNA (10 ng/$\mu$l plasmid pUC (manufactured by Promega)), a fluorescent dye solution (0.05 $\mu$g/ml SYBR Green I (manufactured by Molecular Probes company))

Primer Array:

Forward primer: sequence number 1
Reverse primer: sequence number 2

4 $\mu$l of the above-mentioned reagent (40 ng as template DNA) was injected with a pipette to the sample inlet 11, and the reagent was filled in the concave for the supply part 12. Next, the areas right under the two toroidal infrared rays heaters were heated to 65°C and 95°C by the two toroidal infrared rays heaters. Furthermore, the above-mentioned substrate was rotated by applying the centrifugal force for sending the reagent filled in the concave for the supply part 12 to the zigzag part 13 and passing it. The rotation number of the above-mentioned substrate was 2,500 rpm, whereby the reagent passed the zigzag part 13 taking 20 seconds for one reciprocation (flow rate: seconds per about 1 mm).

After 20 minute rotation with 2,500 rpm of rotational speed, the substrate was stopped for 30 seconds. Then, the substrate was rotated with 500 rpm of rotational speed, and fluorescence intensity was measured by the above-mentioned optical detection system per one reciprocation of the channel 10 of the zigzag part 13.

In addition, for comparison, the same measurement was also carried out in the case that template DNA was omitted from the above-mentioned reagent, and the template DNA concentration was diluted to 100-fold.

Fig. 17 is a correlation curve of the fluorescence intensity and reciprocation times of the zigzag part. As results, DNA amplification curve was obtained which is well correlated to the amount of the template DNA (0, 0.4, 40 ng) that is the objective substance for quantification.

Furthermore, relation formula of flow rate of general liquid and rotational speed of the above-mentioned substrate is shown in the following Equation 1.

$$u = d_H{}^2 \rho \omega^2 \bar{r} \Delta r / 32 \eta L$$

$$(1)$$

Symbols in the above-mentioned Numerical Formula 1 are as follows.
u: Flow rate
$d_H$: hydraulic diameter

ρ: Density
ω: Angular velocity
r: Mean radius
Δr: Difference of the radiuses between the initial point and the last point of the channel
η: Viscosity
L: Total length of the channel
In the above, hydraulic diameter is a liquid parameter adapted to the rectangular channel, and calculated with the following Equation 2.

$$d_H = 2wd/(w+d)$$

$$(2)$$

Symbols in the above-mentioned Numerical Formula 2 are as follows.
w: Channel width
d: Channel depth
The results as measured above are shown in Fig. 17.

"Sequence listing free text"

Sequence No. 1: DNA forward primer for PCR for amplifying specific sequence on a plasmid pUC.
Sequence No. 2: DNA reverse primer for PCR for amplifying specific sequence on a plasmid pUC.

Industrial Applicability

According to the present invention, it is possible to provide a method of nucleic acid analysiss which enables analysis work of using analysis measurement principle of flow system reaction and tracing the reactive progress process to be carried out more simply and shortly, and also a nucleic acid analysis device and a disk for nucleic acid analysis which is equipped compactly with detection system, reaction system, output system and drive system, and can be manufactured inexpensively.

**Claims**

1. A method of nucleic acid analysis, comprising:

   providing a channel having a repetitive pattern of temperature differences for progress of temperature dependent reaction of nucleic acids;
   routing a sample containing nucleic acids through the channel having the repetitive pattern of temperature differences to perform the temperature dependent reaction of nucleic acids; and
   performing optical detection at two or more detection points on the channel while the sample flows in the channel.

2. The method of nucleic acid analysis according to claim 1, wherein the temperature dependent reaction is an amplification reaction.

3. The method of nucleic acid analysis according to claim 1, wherein the sample containing nucleic acids includes DNA polymerase, primer DNA, and dNTPs.

4. The method of nucleic acid analysis according to any one of claims 1 to 3, wherein the optical detection is carried out with detecting transmitted light, reflected light or luminescent light derived from the light irradiated to a number of detecting places on the channel.

5. The method of nucleic acid analysis according to any one of claims 1 to 4, wherein the repetitive pattern is formed from a high temperature area and a low temperature area, and the optical detection at the two or more places is carried out at the detection places in which the sample containing nucleic acids passes a low temperature area.

6. The method of nucleic acid analysis according to any one of claims 1 to 5, wherein the channel has a zigzag pattern at least partially, and the channel extending from the turning part of such zigzag pattern to the next turning part is formed so as to pass the areas having different temperatures.

7. The method of nucleic acid analysis according to claim 6, wherein the channel is formed on a disk driven by rotation, the high temperature area and the low temperature area are formed concentrically thereon, and the zigzag pattern is formed so that the channel extending from the turning part of the zigzag pattern to the next turning part, passes the concentrically formed high temperature area and low temperature area, and the sample containing nucleic acids flowing on the channel is sent with centrifugal force by rotating thereof.

8. The method of nucleic acid analysis according to claim 7, wherein an information recording area and a sample analysis area are installed on the disk, reading or writing of information is performed using the information recording area, and optical detection is carried out with installing the channel in the analysis area.

9. The method of nucleic acid analysis according to claim 8, wherein the reading or writing of information for the information recording area, and optical detection for the analysis area are carried out respectively in the opposite direction with the disk interposed therebetween.

10. A nucleic acid analysis device, comprising a channel flowing a sample containing nucleic acids, a temperature control means controlling the temperature of the passing area so that the temperature of the sample containing nucleic acids changes in the repetitive pattern when the sample containing nucleic acids flows the channel, and a photodetection means for optically detecting the sample containing nucleic acids flowing on the channel, wherein detection is carried out by the photodetection means at two or more places of the channel.

11. The nucleic acid analysis device according to claim 10, wherein the photodetection means has a light emitting means for irradiating light to a number of places to be detected on the channel, and a light receiving means for detecting transmitted light, reflected light or luminescent light by the irradiated light.

12. The nucleic acid analysis device according to claim 10 or 11, wherein the detection at the two or more places is carried out at a place in which the sample containing nucleic acids passes through the part of which the temperature is not high.

13. The nucleic acid analysis device according to any one of claims 10 to 12, wherein the channel has at least partially a zigzag pattern, and the channel extending from the turning part of such zigzag pattern to the next turning part passes the temperature-controlled areas formed by the temperature control means.

14. The nucleic acid analysis device according to claim 13, wherein the channel is formed on a disk driven by rotation, a high temperature area and a low temperature area are formed concentrically thereon, and the zigzag pattern is formed so that the channel extending from the turning part of the zigzag pattern to the next turning part, passes the concentrically formed high temperature area and low temperature area, and a sample containing nucleic acids flowing on the channel is sent with centrifugal force by rotating thereof.

15. The nucleic acid analysis device according to claim 14, wherein an information recording area and a sample analysis area are formed on the disk, in the information recording area, a reading or writing means of optical recording media carrying out reading or writing of information are opposed to each other, and in the analysis area, the photodetection means for irradiating the light to predetermined places of the channel to detect the transmitted light, the reflected light or the luminescent light are opposed to each other.

16. The nucleic acid analysis device according to claim 15, wherein the reading or writing of information for the information recording area, and optical detection for the analysis area are carried out respectively in the opposite direction through intervening the disk.

17. A disk for nucleic acid analysis driven by rotation, which has an information recording area for carrying out reading or writing of information, and a sample analysis area in which a channel flowing a sample containing nucleic acids is formed, wherein the direction of reading or writing of information for the information recording area, and the photodetection direction for the analysis area are opposite to each other with the disk interposed therebetween.

18. The disk for nucleic acid analysis according to claim 17, wherein the channel has at least partially a zigzag pattern which winds in a zigzag manner and proceeds along the direction of the circumference of the disk.

19. The disk for nucleic acid analysis according to claim 17 or 18, wherein cavities for a supply part and cavities for a receipt part are formed, respectively on a part of the channel, and the cavities for a supply part is located in the inner side than the cavities for a reception part and the channel having the zigzag pattern.

20. The disk for nucleic acid analysis according to any one of claims 17 to 19, wherein the information recording area has a record structure of the optical recording media.

21. The disk for nucleic acid analysis according to any one of claims 17 to 20, wherein the information recording area

**EP 1 584 692 B1**

has a recorded layer and a reflective layer located in its back side, and the analysis area has the channel and a reflective layer located in its back side, wherein the recorded layer and the channel are located on the opposite side to the corresponding reflective layers.

22. The disk for nucleic acid analysis according to any one of claims 17 to 21, wherein the information recording area is installed in the inner side, and the analysis area is installed in the outer side.

23. The disk for nucleic acid analysis according to any one of claims 17 to 22, wherein a concave part of the channel is formed on the same plane as the pre-groove-forming surface of the information recording area, and the channel is formed so that the opening of the concave part is sealed with a sealing member.

24. The disk for nucleic acid analysis according to any one of claims 17 to 22, further comprising a substrate in which a pre-groove of the information recording area, a recording layer and a reflective layer are formed on one surface, and a sealing member formed on the reflective layer-forming surface of this substrate, directly or through a protecting layer, wherein the concave part of the channel is formed on the inner surface of the sealing member.

25. The disk for nucleic acid analysis according to any one of claims 17 to 24, wherein pre-pit or pre-groove in which information readable by the photodetection means is described, is formed in the analysis area.

**Patentansprüche**

1. Verfahren zur Nukleinsäure-Analyse, umfassend:

   das Bereitstellen eines Kanals, der ein sich wiederholendes Muster von Temperaturunterschieden für eine vom Fortschreiten der Temperatur abhängigen Reaktion von Nukleinsäuren aufweist;
   das Leiten einer Probe, die Nukleinsäuren enthält, durch den Kanal, der das sich wiederholende Muster von Temperaturunterschieden aufweist, um die Temperatur-abhängige Reaktion von Nukleinsäuren durchzuführen; und
   das Durchführen eines optischen Nachweises bei zwei oder mehr Nachweispunkten auf dem Kanal, während die Probe in dem Kanal fließt.

2. Verfahren zur Nukleinsäure-Analyse nach Anspruch 1, wobei die Temperatur-abhängige Reaktion eine Amplifikationsreaktion ist.

3. Verfahren zur Nukleinsäure-Analyse nach Anspruch 1, wobei die Probe, welche Nukleinsäuren enthält, DNA-Polymerase, Primer-DNA und dNTPs enthält.

4. Verfahren zur Nukleinsäure-Analyse nach einem der Ansprüche 1 bis 3, wobei der optische Nachweis mit dem Nachweisen von ausgesendetem Licht, reflektiertem Licht oder lumineszierenden Licht, welches von dem Licht stammt, das auf eine Anzahl von Nachweisstellen in dem Kanal strahlt, durchgeführt wird.

5. Verfahren zur Nukleinsäure-Analyse nach einem der Ansprüche 1 bis 4, wobei das sich wiederholende Muster durch ein Hochtemperaturgebiet und ein Niedrigtemperaturgebiet gebildet wird und der optische Nachweis an den zwei oder mehreren Stellen an den Nachweisstellen ausgeführt wird, in denen die Probe, welche Nukleinsäuren enthält, ein Niedrigtemperaturgebiet passiert.

6. Verfahren zur Nukleinsäure-Analyse nach einem der Ansprüche 1 bis 5, wobei der Kanal zumindest teilweise ein Zickzackmuster aufweist und der Kanal, der sich von einem Wendeabschnitt eines solchen Zickzackmusters zum nächsten Wendeabschnitt erstreckt, so gebildet ist, daß er Gebiete mit verschiedenen Temperaturen passiert.

7. Verfahren zur Nukleinsäure-Analyse nach Anspruch 6, wobei der Kanal auf einer durch Rotation getriebenen Scheibe gebildet wird, wobei das Hochtemperaturgebiet und das Niedrigtemperaturgebiet darauf konzentrisch gebildet sind, und das Zickzackmuster so gebildet ist, daß der sich von dem Wendebereich des Zickzackmusters zum nächsten Wendebereich erstreckende Kanal das konzentrisch ausgebildete Hochtemperaturgebiet und Niedrigtemperaturgebiet passiert und die Probe, welche die Nukleinsäuren enthält und auf dem Kanal fließt, durch deren Rotation mit Fliehkraft geschickt wird.

8. Verfahren zur Nukleinsäure-Analyse nach Anspruch 7, wobei ein Informationsaufnahmegebiet und ein Probenanalysegebiet auf der Scheibe installiert sind, das Lesen oder Schreiben von Information unter Verwendung des Informationsaufnahmegebiets durchgeführt wird und der optische Nachweis durch das Installieren des Kanals in dem Analysegebiet durchgeführt wird.

9. Verfahren zur Nukleinsäure-Analyse nach Anspruch 8, wobei das Lesen oder das Schreiben von Information für das Informationsaufnahmegebiet bzw. der optische Nachweis für das Analysegebiet in der entgegengesetzten Richtung mit der Scheibe dazwischen ausgeführt wird.

10. Einrichtung zur Nukleinsäure-Analyse, umfassend einen Kanal, in dem eine Probe, die Nukleinsäuren enthält, fließt, ein Temperaturkontrollmittel, welches die Temperatur des Gebiets, welches passiert wird, kontrolliert, so daß sich die Temperatur der Probe, welche Nukleinsäuren enthält, in dem sich wiederholenden Muster verändert, wenn die Probe, welche die Nukleinsäuren enthält, durch den Kanal fließt, und ein Photodetektionsmittel zum optischen Nachweisen der Probe, welche Nukleinsäuren enthält, die durch den Kanal fließt, wobei der Nachweis durch das Photodetektionsmittel an zwei oder mehr Stellen des Kanals durchgeführt wird.

11. Einrichtung zur Nukleinsäure-Analyse nach Anspruch 10, wobei das Photodetektionsmittel ein Licht emittierendes Mittel zum Aussenden von Licht an eine Anzahl von Stellen, welche in dem Kanal nachgewiesen werden sollen, und ein Licht empfangendes Mittel zum Nachweisen von übertragenem Licht, reflektiertem Licht oder lumineszierendem Licht durch das ausgesendete Licht aufweist.

12. Einrichtung zur Nukleinsäure-Analyse nach einem der Ansprüche 10 oder 11, wobei der Nachweis an den zwei oder mehr Stellen an einer Stelle durchgeführt wird, an der die Probe, welche Nukleinsäuren enthält, den Teil passiert, an dem die Temperatur nicht hoch ist.

13. Einrichtung zur Nukleinsäure-Analyse nach einem der Ansprüche 10 bis 12, wobei der Kanal zumindest teilweise ein Zickzackmuster aufweist, und der Kanal, der sich von dem Wendeabschnitt eines solchen Zickzackmusters zum nächsten Wendeabschnitt erstreckt, die Temperatur kontrollierten Gebiete, welche durch die Mittel zur Temperaturkontrolle gebildet werden, passiert.

14. Einrichtung zur Nukleinsäure-Analyse nach Anspruch 13, wobei der Kanal auf einer durch Rotation angetriebenen Scheibe gebildet wird, ein Hochtemperaturgebiet und ein Niedrigtemperaturgebiet darauf konzentrisch gebildet werden und das Zickzackmuster so gebildet ist, daß der Kanal, der sich von dem Wendebereich des Zickzackmusters zum nächsten Wendebereich erstreckt, das konzentrisch gebildete Hochtemperaturgebiet und Niedrigtemperaturgebiet passiert, und eine Probe, welche Nukleinsäuren enthält und auf dem Kanal fließt, durch deren Rotation mit Fliehkraft geschickt wird.

15. Einrichtung zur Nukleinsäure-Analyse nach Anspruch 14, wobei ein Informationsaufnahmegebiet und ein Probenanalysegebiet auf der Scheibe gebildet sind, in dem Informationsaufnahmegebiet ein Mittel zum Lesen oder Schreiben von optischen Aufnahmemedien, die das Lesen oder Schreiben von Information ausführen, einander gegenüberstehen und in dem Analysegebiet das Photodetektionsmittel zum Senden des Lichts an vorbestimmte Stellen des Kanals einander gegenüberstehen, um das übertragene Licht, das reflektierte Licht oder das lumineszierende Licht nachzuweisen.

16. Einrichtung zur Nukleinsäure-Analyse nach Anspruch 15, wobei das Lesen oder Schreiben von Information für das Informationsaufnahmegebiet bzw. der optische Nachweis für das Analysegebiet in entgegengesetzter Richtung durch das Vermitteln der Scheibe ausgeführt wird.

17. Durch Rotation angetriebene Scheibe für die Nukleinsäure-Analyse, welche ein Informationsaufnahmegebiet zum Ausführen von Lesen oder Schreiben von Information und ein Probeanalysegebiet aufweist, in welchem ein Kanal gebildet ist, durch den eine Probe, welche Nukleinsäuren enthält, fließt, wobei die Richtung des Lesens oder des Schreibens der Information für das Informationsaufnahmegebiet und die Richtung der Photodetektion für das Analysegebiet einander gegenüberstehen, wobei die Scheibe dazwischen liegt.

18. Scheibe zur Nukleinsäure-Analyse nach Anspruch 17, wobei der Kanal zumindest teilweise ein Zickzackmuster aufweist, welches sich auf eine Zickzackweise windet und sich entlang der Richtung des Umfangs der Scheibe fortsetzt.

**19.** Scheibe zur Nukleinsäure-Analyse nach Anspruch 17 oder 18, wobei auf einem Teil des Kanals Aushöhlungen für ein Versorgungsteil bzw. Aushöhlungen für ein Empfangsteil gebildet sind und die Aushöhlungen für den Versorgungsteil im Vergleich zu den Aushöhlungen für den Empfangsteil auf der inneren Seite angeordnet sind und der Kanal das Zickzackmuster aufweist.

**20.** Scheibe zur Nukleinsäure-Analyse nach einem der Ansprüche 17 bis 19, wobei das Informationsaufnahmegebiet eine Aufnahmestruktur des optischen Aufnahmemediums aufweist.

**21.** Scheibe zur Nukleinsäure-Analyse nach einem der Ansprüche 17 bis 20, wobei das Informationsaufnahmegebiet auf seiner Rückseite angeordnet eine aufgenommene Schicht und eine reflektierende Schicht aufweist, und das Analysegebiet auf seiner Rückseite angeordnet den Kanal und eine reflektierende Schicht aufweist, wobei die aufgenommene Schicht und der Kanal auf gegenüber liegenden Seiten zu den korrespondierenden reflektierenden Schichten angeordnet ist.

**22.** Scheibe zur Nukleinsäure-Analyse nach einem der Ansprüche 17 bis 21, wobei das Informationsaufnahmegebiet in der inneren Seite angebracht ist und das Analysegebiet in der äußeren Seite angebracht ist.

**23.** Scheibe zur Nukleinsäure-Analyse nach einem der Ansprüche 17 bis 22, wobei ein konkaver Teil des Kanals auf der gleichen Ebene wie die Vor-Furchebildende Oberfläche des Informationsaufnahmegebiets ausgebildet ist, und der Kanal derart geformt ist, daß die Öffnung des konkaven Teils mit einem Dichtungselement abgedichtet wird.

**24.** Scheibe zur Nukleinsäure-Analyse nach einem der Ansprüche 17 bis 22, weiter umfassend ein Substrat, in welchem eine Vor-Furche des Informationsaufnahmegebiets, eine aufnehmende Schicht und eine reflektierende Schicht auf einer Oberfläche ausgebildet sind, und ein Dichtungselement, welches auf der Oberfläche des Substrats, welche die reflektierenden Schicht bildet, direkt oder durch eine Schutzschicht ausgebildet wird, wobei der konkave Teil des Kanals auf der inneren Oberfläche des Dichtungselements gebildet wird.

**25.** Scheibe zur Nukleinsäure-Analyse nach einem der Ansprüche 17 bis 24, wobei eine Vor-Grube oder eine Vor-Furche, in welche durch ein Photodetektionsmittel lesbare Information beschrieben wird, in dem Analysegebiet ausgebildet wird.

**Revendications**

**1.** Procédé d'analyse d'acide nucléique, comprenant les étapes consistant à :

• fournir un canal ayant un motif répétitif de différences de température pour la progression d'une réaction d'acides nucléiques dépendante de la température ;
• acheminer un échantillon contenant des acides nucléiques dans le canal ayant le motif répétitif de différences de température pour réaliser la réaction d'acides nucléiques dépendante de la température ; et
• effectuer la détection optique à deux ou davantage de points de détection sur le canal tandis que l'échantillon s'écoule dans le canal.

**2.** Procédé d'analyse d'acide nucléique selon la revendication 1, dans lequel la réaction dépendante de la température est une réaction d'amplification.

**3.** Procédé d'analyse d'acide nucléique selon la revendication 1, dans lequel l'échantillon contenant des acides nucléiques comprend une ADN polymérase, un ADN d'amorce et des dNTP.

**4.** Procédé d'analyse d'acide nucléique selon l'une quelconque des revendications 1 à 3, dans lequel la détection optique est effectuée par détection de lumière transmise, de lumière réfléchie ou de lumière luminescente dérivée de la lumière irradiée sur un certain nombre d'endroits de détection sur le canal.

**5.** Procédé d'analyse d'acide nucléique selon l'une quelconque des revendications 1 à 4, dans lequel le motif répétitif est formé à partir d'une zone de haute température et d'une zone de basse température, et la détection optique aux deux ou davantage d'endroits est effectuée aux endroits de détection dans lesquels l'échantillon contenant des acides nucléiques traverse une zone de basse température.

**EP 1 584 692 B1**

**6.** Procédé d'analyse d'acide nucléique selon l'une quelconque des revendications 1 à 5, dans lequel le canal présente un motif en zigzag au moins partiellement, et le canal s'étendant depuis le point de virage d'un tel motif en zigzag jusqu'au point de virage suivant, est formé de manière à traverser les zones ayant des températures différentes.

**7.** Procédé d'analyse d'acide nucléique selon la revendication 6, dans lequel le canal est formé sur un disque commandé par rotation, la zone de haute température et la zone de basse température sont formées de manière concentrique sur celui-ci, et le motif en zigzag est formé pour que le canal s'étendant depuis le point de virage du motif en zigzag jusqu'au point de virage suivant, traverse la zone de haute température et la zone de basse température tracées de manière concentrique, et l'échantillon contenant des acides nucléiques s'écoulant dans le canal est expédié par force centrifuge par rotation de celui-ci.

**8.** Procédé d'analyse d'acide nucléique selon la revendication 7, dans lequel une zone d'enregistrement d'informations et une zone d'analyse d'échantillon sont installées sur le disque, la lecture ou la transcription d'informations est exécutée en utilisant la zone d'enregistrement d'informations, et la détection optique est effectuée par installation du canal dans la zone d'analyse.

**9.** Procédé d'analyse d'acide nucléique selon la revendication 8, dans lequel la lecture ou la transcription d'informations pour la zone d'enregistrement d'informations, et la détection optique pour la zone d'analyse sont effectuées respectivement dans la direction opposée, le disque étant interposé entre celles-ci.

**10.** Appareil d'analyse d'acides nucléiques, comprenant un canal d'écoulement pour un échantillon contenant des acides nucléiques, des moyens de régulation de température qui régulent la température de la zone de passage pour que la température de l'échantillon contenant des acides nucléiques varie dans le motif répétitif lorsque l'échantillon contenant des acides nucléiques s'écoule dans le canal, et des moyens de photodétection pour détecter optiquement l'échantillon contenant des acides nucléiques s'écoulant dans le canal, dans lequel la détection est effectuée par les moyens de photodétection à deux ou davantage d'endroits du canal.

**11.** Appareil d'analyse d'acide nucléique selon la revendication 10, dans lequel les moyens de photodétection comprennent des moyens électroluminescents pour irradier la lumière sur un certain nombre d'endroits à détecter sur le canal, et des moyens de réception optique pour détecter la lumière transmise, la lumière réfléchie ou la lumière luminescente par la lumière irradiée.

**12.** Appareil d'analyse d'acide nucléique selon la revendication 10 ou 11, dans lequel la détection aux deux ou davantage d'endroits est effectuée à un endroit dans lequel l'échantillon contenant des acides nucléiques traverse la partie dont la température n'est pas haute.

**13.** Appareil d'analyse d'acide nucléique selon l'une quelconque des revendications 10 à 12, dans lequel le canal présente au moins partiellement un motif en zigzag, et le canal s'étendant depuis le point de virage d'un tel motif en zigzag jusqu'au point de virage suivant, traverse les zones à température régulée formées par les moyens de régulation de température.

**14.** Appareil d'analyse d'acide nucléique selon la revendication 13, dans lequel le canal est formé sur un disque commandé par rotation, une zone de haute température et une zone de basse température sont formées de manière concentrique sur celui-ci, et le motif en zigzag est formé pour que le canal s'étendant depuis le point de virage du motif en zigzag jusqu'au point de virage suivant, traverse la zone de haute température et la zone de basse température tracées de manière concentrique, et un échantillon contenant des acides nucléiques s'écoulant dans le canal est expédié par force centrifuge par rotation de celui-ci.

**15.** Appareil d'analyse d'acide nucléique selon la revendication 14, dans lequel une zone d'enregistrement d'informations et une zone d'analyse d'échantillon sont formées sur le disque, dans la zone d'enregistrement d'informations, des moyens de lecture ou de transcription de supports d'enregistrement optiques exécutant la lecture ou la transcription d'informations sont opposés l'un à l'autre, et dans la zone d'analyse, les moyens de photodétection pour irradier la lumière sur des endroits prédéterminés du canal pour détecter la lumière transmise, la lumière réfléchie ou la lumière luminescente sont opposés l'un à l'autre.

**16.** Appareil d'analyse d'acide nucléique selon la revendication 15, dans lequel la lecture ou la transcription d'informations pour la zone d'enregistrement d'informations, et la détection optique pour la zone d'analyse sont effectuées respectivement dans la direction opposée par intervention du disque.

**19**

**17.** Disque pour l'analyse d'acide nucléique commandé par rotation, qui comprend une zone d'enregistrement d'informations pour exécuter la lecture ou la transcription d'informations, et une zone d'analyse d'échantillon dans laquelle un canal d'écoulement pour un échantillon contenant des acides nucléiques est formé, dans lequel la direction de la lecture ou de la transcription d'informations pour la zone d'enregistrement d'informations, et la direction de la photodétection pour la zone d'analyse sont opposées l'une à l'autre, le disque étant interposé entre celles-ci.

**18.** Disque pour l'analyse d'acide nucléique selon la revendication 17, dans lequel le canal présente au moins partiellement un motif en zigzag qui serpente d'une manière en zigzag et procède le long de la direction de la circonférence du disque.

**19.** Disque pour l'analyse d'acide nucléique selon la revendication 17 ou 18, dans lequel des cavités pour une partie de fourniture et des cavités pour une partie de réception sont formées, respectivement sur une partie du canal, et les cavités pour une partie de fourniture sont situées dans la face intérieure par rapport aux cavités pour une partie de réception et le canal ayant le motif en zigzag.

**20.** Disque pour l'analyse d'acide nucléique selon l'une quelconque des revendications 17 à 19, dans lequel la zone d'enregistrement d'informations présente une structure d'enregistrement des supports d'enregistrement optiques.

**21.** Disque pour l'analyse d'acide nucléique selon l'une quelconque des revendications 17 à 20, dans lequel la zone d'enregistrement d'informations comprend une couche enregistrée et une couche réfléchissante situées sur sa face arrière, et la zone d'analyse comprend le canal et une couche réfléchissante situés sur sa face arrière, dans lequel la couche enregistrée et le canal sont situés sur la face opposée aux couches réfléchissantes correspondantes.

**22.** Disque pour l'analyse d'acide nucléique selon l'une quelconque des revendications 17 à 21, dans lequel la zone d'enregistrement d'informations est installée sur la face intérieure, et la zone d'analyse est installée sur la face extérieure.

**23.** Disque pour l'analyse d'acide nucléique selon l'une quelconque des revendications 17 à 22, dans lequel une partie concave du canal est tracée sur le même plan que la surface formant des pré-sillons de la zone d'enregistrement d'informations, et le canal est tracé pour que l'ouverture de la partie concave soit scellée par un élément de scellement.

**24.** Disque pour l'analyse d'acide nucléique selon l'une quelconque des revendications 17 à 22, comprenant en outre un substrat dans lequel un pré-sillon de la zone d'enregistrement d'informations, une couche d'enregistrement et une couche réfléchissante sont formés sur une surface, et un élément de scellement est formé sur la surface formant la couche réfléchissante de ce substrat, directement ou par le biais d'une couche de protection, dans lequel la partie concave du canal est tracée sur la surface intérieure de l'élément de scellement.

**25.** Disque pour l'analyse d'acide nucléique selon l'une quelconque des revendications 17 à 24, dans lequel un pré-creux ou pré-sillon dans lequel l'information lisible par les moyens de photodétection est décrite, est formé dans la zone d'analyse.

# FIG. 1(a)

# FIG. 1(b)

# FIG. 2

# FIG. 3(a)

# FIG. 3(b)

FIG. 4

FIG. 5

# FIG. 6

EP 1 584 692 B1

# FIG. 7(a)

(a)

# FIG. 7(b)

# FIG. 7(c)

# FIG. 8(a)

# FIG. 8(b)

# FIG. 9

EP 1 584 692 B1

# FIG. 10

# FIG. 11

EP 1 584 692 B1

# FIG. 12

EP 1 584 692 B1

# FIG. 13

EP 1 584 692 B1

```
S1 ──  DYE FILM-ADDED MOLDING
        SUBSTRATE (CHANNEL
        FORMATION)
              │
              ▼
S2 ──    Au SPUTTER
              │
              ▼
S3 ──   TC SCREEN PRINTING
        (CHANNEL FORMATION)
              │
              ▼
S4 ──      UV CURING
              │
              │     POLYETHYLENE LAYER-LAMINATED
              │              FILM
              ▼
S5 ──      HEAT SEAL
```

# FIG. 14

**S1** — DYE FILM-ADDED MOLDING SUBSTRATE

↓

**S2** — Au SPUTTER

↓

**S3** — TC SCREEN PRINTING

↓

**S4** — UV CURING

↓

CHANNEL FORMING AGENT POLYETHYLENE LAYER-LAMINATED FILM

↓

**S5** — HEAT SEAL

EP 1 584 692 B1

FIG. 15

FIG. 16

FIG. 17

**EP 1 584 692 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000512138 T
- JP 2000509608 T
- JP 2000511435 T
- JP 6030776 A
- JP 2003149253 T
- JP 2002503331 T
- JP 2004116173 A

### Non-patent literature cited in the description

- **KOPP et al.** *Science,* 1998, vol. 280, 1046-1048